(19) Europäisches Patentamt
European Patent Office
Office européen des brevets

(11) EP 2 268 719 B1

(12) # FASCICULE DE BREVET EUROPEEN

(45) Date de publication et mention de la délivrance du brevet:
**23.10.2013 Bulletin 2013/43**

(21) Numéro de dépôt: **09730350.7**

(22) Date de dépôt: **19.03.2009**

(51) Int Cl.:
***C08J 5/22*** *(2006.01)* ***C08J 3/075*** *(2006.01)*
***C08L 83/08*** *(2006.01)* ***C08L 83/12*** *(2006.01)*
***C08L 71/00*** *(2006.01)* ***C08G 77/26*** *(2006.01)*
***C08G 77/28*** *(2006.01)* ***C08G 77/08*** *(2006.01)*
***H01M 8/10*** *(2006.01)* ***H01B 1/12*** *(2006.01)*
***B01J 39/04*** *(2006.01)* ***H01B 1/04*** *(2006.01)*
***B01J 39/16*** *(2006.01)* ***C08G 65/20*** *(2006.01)*
***C08G 65/333*** *(2006.01)* ***C08G 65/336*** *(2006.01)*

(86) Numéro de dépôt international:
**PCT/FR2009/000289**

(87) Numéro de publication internationale:
**WO 2009/125084 (15.10.2009 Gazette 2009/42)**

(54) **MATÉRIAU HYBRIDE ÉLECTROLYTE SUPERCONDUCTEUR, SON PROCÉDÉ DE PRÉPARATION ET SES APPLICATIONS**

SUPRALEITENDES ELEKTROLYTISCHES HYBRIDMATERIAL UND HERSTELLUNGSVERFAHREN UND VERWENDUNGEN DAFÜR

SUPERCONDUCTING ELECTROLYTIC HYBRID MATERIAL, AND PREPARATION METHOD AND USES THEREOF

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **19.03.2008 FR 0801509**

(43) Date de publication de la demande:
**05.01.2011 Bulletin 2011/01**

(73) Titulaire: **Centre National de la Recherche Scientifique**
**75016 Paris (FR)**

(72) Inventeurs:
- **BARBIOU, Mihail-Dumitru**
**F-34080 Montpellier (FR)**
- **MICHAU, Mathieu**
**F-66300 Ponteilla (FR)**

(74) Mandataire: **Mena, Sandra**
**Cabinet Orès**
**36, rue de St Pétersbourg**
**75008 Paris (FR)**

(56) Documents cités:
**WO-A-2005/111114 US-A1- 2005 164 063**
- **LINDNER E ET AL: "Supported organometallic complexes - Part XXX. Hydroformylation of 1-hexene in interphases-the influence of different kinds of inorganic-organic hybrid co-condensation agents on the catalytic activity" JOURNAL OF ORGANOMETALLIC CHEMISTRY, ELSEVIER-SEQUOIA S.A. LAUSANNE, CH, vol. 641, no. 1-2, 4 janvier 2002 (2002-01-04), pages 165-172, XP004326734 ISSN: 0022-328X**
- **SUNG ET AL: "Novel Thermally Stable Cross-Linked Nonlinear Optical Silica Films Prepared by a Sol-Gel Process" CHEMISTRY OF MATERIALS ,10(6),1642-1646 CODEN: CMATEX; ISSN: 0897-4756,, 1 janvier 1998 (1998-01-01), XP002497202**
- **MATHIEU MICHAU, MIHAIL BARBOIU, RÉMI CARABALLO, CAROLE ARNAL-HÉRAULT, PASCAL PERRIAT, ARIE VAN DER LEE, A. PASC: "Ion-Conduction Pathways in Self-Organised Ureidoarene-Heteropolysiloxane Hybrid Membranes" CHEMISTRY - A EUROPEAN JOURNAL, [Online] vol. 14, no. 6, 17 décembre 2007 (2007-12-17), pages 1776-1783, XP002499581 Extrait de l'Internet: URL:http: //www3.interscience.wiley.com/cgi -bin/fulltext/ 117865704/HTMLSTART> [extrait le 2008-10-13]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 268 719 B1

Remarques:

Le dossier contient des informations techniques présentées postérieurement au dépôt de la demande et ne figurant pas dans le présent fascicule.

## Description

La présente invention est relative à un nouveau matériau polymère hybride superconducteur, à son procédé de préparation et à ses utilisations, notamment à titre de membrane super-échangeuse de protons utilisable en tant qu'électrolyte dans les piles à combustible.

L'invention qui va être décrite ci-après s'inscrit notamment dans le contexte de la conversion et de la gestion d'énergie. De nos jours, la production et la consommation d'énergie reposent majoritairement sur la combustion des ressources fossiles, ce qui est prévu pour avoir à terme un impact majeur sur l'économie mondiale et un effet défavorable sur l'environnement et l'écologie de la planète (carences de combustibles fossiles et pollutions atmosphériques croissantes). C'est pourquoi la conversion d'énergie de manière électrochimique à l'aide de piles à combustible est sérieusement considérée comme une source d'énergie et de puissance alternative (vecteur d'énergie).

Les piles à combustible à membrane échangeuse de protons, connues aussi sous le nom de piles à combustible à membrane électrolyte polymère (ou PEMFC selon l'acronyme des expressions anglaises *"Proton Exchange Membrane Fuel Cells"* ou *"Polymer Electrolyte Membrane Fuel Cells")* sont un type de piles à combustible développées pour des applications dans les transports aussi bien que pour des applications portables. Le principe des piles à combustible a été démontré expérimentalement en 1839 par l'électrochimiste britannique Sir William Grove. Les premières piles à combustible de type PEMFC furent développées aux Etats- Unis à partir des années 1960 par General Electric pour des applications spatiales. Actuellement, ce type de piles, prévues pour fonctionner à des températures intermédiaires (40- 120°C), est internationalement développé par les industries de l'automobile et de l'électronique portable. Mais en dépit d'avantages environnementaux indéniables, et de rendements énergétiques supérieurs, les piles à combustible commencent juste à entrer en compétition avec les moteurs à explosion à cause de coûts encore importants (matière premières, durées de vie) .

Le coeur d'une pile à combustible de type PEMFC est composé d'une membrane électrolyte polymère, d'électrodes (anode et cathode, le plus souvent sous la forme de fines couches de platine) et de plaques bipolaires servant à la diffusion gazeuse.

Les piles à combustible fonctionnant avec des membranes électrolytes polymères échangeuses de protons, permettent de convertir l'énergie chimique de gaz ($H_2/O_2$) en énergie électrique avec de hauts rendements énergétiques et sans aucun rejet de polluant, selon les équations suivantes :

Réaction à la cathode (siège de la réduction de l'oxygène) :

$$\tfrac{1}{2}O_2 + 2H^+ + 2e^- \rightarrow H_2O$$

Réaction à l'anode (siège de l'oxydation de l'hydrogène) :

$$H_2 \rightarrow 2H^+ + 2\,e^-$$

Les deux électrodes étant séparées par l'électrolyte (membrane), à l'anode on amène le combustible à oxyder (hydrogène), et la cathode est alimentée en oxygène (ou plus simplement en air, enrichi ou non en oxygène) . A l'anode, le dihydrogène réagit et libère 2 électrons (oxydation) qui alimentent un circuit électrique extérieur reliant l'anode et la cathode. A la cathode, on assiste à la réduction cathodique de l'oxygène. Les réactifs sont en principe introduits en continu dans le dispositif et la force électromotrice de la pile est égale à la différence des potentiels d'électrodes. Ainsi, on obtient une réaction globale universellement connue :

$$H_2 + \tfrac{1}{2}O_2 \rightarrow H_2O$$

De l'eau est donc produite par le fonctionnement normal de la pile qui doit être évacuée à l'extérieur de la membrane. La gestion de l'eau est cruciale pour les performances de la pile ; il convient de veiller à ce que la quantité en eau reste constamment à un niveau optimum garantissant le bon fonctionnement de la pile. En particulier, un excès d'eau conduit à un gonflement excessif de la membrane, à un engorgement des canaux de distribution ou des électrodes et a un effet négatif sur l'accès des gaz aux sites catalytiques, alors qu'une quantité d'eau insuffisante conduit à un assèchement de la membrane ce qui nuit à sa conductivité et au rendement de la pile.

Le rôle de la membrane est donc d'assurer le transport des protons ($H^+$) de l'anode vers la cathode et permettre ainsi la réaction électrochimique. Elle ne doit cependant pas conduire les électrons ce qui créerait un court-circuit dans la pile à combustible. La membrane doit être résistante à l'environnement réducteur à l'anode et, en même temps, à un environnement oxydant à la cathode mais également empêcher le mélange de l'hydrogène contenu à l'anode avec l'oxygène contenu à la cathode.

Un des premiers polymères transporteurs protoniques qui a été utilisé pour la réalisation de telles membranes, et qui reste aujourd'hui la référence dans ce domaine, est le Nafion®, un polymère perfluorosulfonique développé et mis au point en 1968 par la firme américaine Du Pont de Nemours. Historiquement, les programmes spatiaux Gemini de la NASA dans les années 60 utilisaient des piles à combustible comportant des membranes de type polystyrène sulfoné mais très vite elles furent supplantées par les membranes Nafion® qui ont permis d'améliorer la performance des PEMFC. Sur le plan chimique, il s'agit d'un polymère organique, constitué d'une chaîne fluorocarbonée flexible sur laquelle sont distribués de façon statistique des groupements ioniques (Mauritz K. A. et al., Chem Rev., 2004, 104, 4535-4585). Sur le principe du Nafion®, il existe également d'autres polymères commerciaux perfluorosulfoniques tels que ceux vendus sous les dénominations commerciales Aciplex® (Asahi Chemical Company, Japon) ou Flemion® (Asahi Glass Company, Japon).

Les membranes fabriquées à partir de ces polymères sont par nature très stables chimiquement, thermiquement et mécaniquement (flexibilité). Elles présentent de bonnes propriétés électrochimiques avec une conductivité élevée, de l'ordre de 0,1 $S.cm^{-1}$ à température ambiante et 100 % d'humidité relative (selon les données du fabricant pour le Nafion®). Toutefois, ces membranes doivent fonctionner à une température inférieure à 90°C et doivent toujours rester saturées en eau pour permettre un déplacement efficace des ions $H^+$. En effet, la conduction des protons se fait principalement par un mécanisme de type Grotthus, c'est-à-dire par sauts de protons le long des chemins de conduction ioniques et hydrophiles (Mauritz K. A. *et al.,* 2004, pré-cité). Par ailleurs, la synthèse de ces membranes est longue, délicate, voire dangereuse compte tenu de l'utilisation de fluor, ce qui justifie en partie leur coût de revient très élevé. Elles ne donnent pas non plus entière satisfaction en ce qui concerne les problèmes liés à la gestion de l'eau et aux changements de température. En effet, lorsque le système subit de nombreuses variations du taux d'humidité, on note une apparition de cycles successifs de gonflement et de restructuration de la membrane entraînant une fatigue importante. Par ailleurs, le Nafion® est un polymère qui subit tout naturellement une transition vitreuse (Tg = 120°C), ce qui contribue à son vieillissement accéléré et à l'apparition de réorganisations structurales et de faiblesses mécaniques (ruptures) limitant ainsi sa durée de vie.

D'autres types de polymères alternatifs utilisables pour la préparation de membranes électrolytes ont également déjà été proposés. Il s'agit en particulier de polymères thermostables sulfonés ou dopés (polyaryléthercétones sulfonés, polybenzymidazoles, polyaryléthersulfones, etc...) . Ces polymères conduisent à des membranes présentant aussi certains inconvénients, notamment en termes de conductivité (performance), de durée de vie et de gestion de l'eau.

La demande de brevet US 2005/0164063 décrit la synthèse de différents composés et électrolytes solides obtenus à partir de précurseurs à base de silsesquioxane dans lesquels une fonction siloxane est liée à un groupement phénylsulfonate par l'intermédiaire d'un groupement divalent exempt de fonction urée. De telle structures, dans lesquelles le groupement divalent liant la fonction siloxane au phénylsulfonate est un radical alkyle ou aryle, ont l'inconvénient de présenter de faibles conductivités (Electrochimica Acta, 2003, 48, 2181-2186).

C'est pourquoi, pour palier aux faiblesses respectives de chacun de ces systèmes, de nombreux travaux de modification par incorporation de phases inorganiques ont été effectués ces dernières années, ce qui a entraîné une amélioration globale des propriétés des PEMFC. Cela se traduit en particulier au niveau de la gestion de l'eau ainsi qu'au niveau du comportement des matériaux à haute température (déshydratation) et de leur stabilité à long terme. Ces concepts se sont généralisés avec l'apparition des membranes hybrides qui ont également permis de mettre en évidence l'importance de la présence d'un réseau continu inorganique au sein de l'électrolyte conducteur.

Des complexes monomériques à base de rhodium obtenus par réaction du (p- aminophényl) diphénylphosphine avec du 3- isocyanatopropyl- triéthoxysilane, présentant des propriétés catalytiques améliorées, sont également connus et utilisés pour des polymérisations sol- gel (J. Organomet. Chem., 2002, 641, 165- 172) .

Des films préparés par réaction d'un alkoxysilane avec du 4- [(4"- aminophényl) sulfonyl]- 4'- [N, N"- bis (2- hydroxyéthyl) amino] azobenzène, par polymérisation sol- gel sont également décrits dans Chem. Mater., 1998, 10, 1642- 1646, pour leurs applications dans le domaine de l'optique.

La Demande WO 2005/111114 décrit des structures polysiloxanes réticulées conductrices de protons, et notamment des membranes polymères hybrides obtenus par polymérisation sol- gel du $(MeO)_3Si- CH_2- CH_2- C_6H_4- SO_3H$. D'autres membranes polymères hybrides pour le transport de protons, obtenues par polymérisation sol- gel de monomères tels que $(EtO)_3Si- CH_2- CH_2- CH_2-$ NH- CO- NH- Ar, ont également été décrites dans Chem. Eur. J., 2008, 14, 1776- 1783.

Malheureusement, à l'heure actuelle, aucune membrane, quelle que soit sa nature, ne satisfait pleinement aux exigences drastiques des constructeurs et utilisateurs de PEMFC. Bien que beaucoup de dispositifs techniques opérationnels utilisant ces systèmes électrochimiques soient apparus sur le marché, tels que par exemple la pile à combustible GENEPAC qui est issue d'un partenariat entre PSA Peugeot Citroën et le Commissariat à l'Energie Atomique, et dont la puissance peut aller jusqu'à 80 KW, il subsiste encore des verrous technologiques à lever.

En terme de gestion de l'eau tout d'abord : comme on l'a vu précédemment il est primordial de gérer l'eau produite pendant le fonctionnement de la pile et son influence sur les propriétés de la membrane électrolyte (notamment la conductivité). Cette nécessité de contrôler et gérer au mieux les transports d'eau se produisant dans une PEMFC

(entrées, sorties, génération, et rétro-diffusion entre cathode et anode) demeure une contrainte très importante qui encourage la réalisation d'électrolytes moins dépendants de l'humidité relative.

En terme de température de fonctionnement également : les piles à combustible de type Nafion® ne peuvent travailler qu'à des températures maximales de 90°C. Pour des températures supérieures, les membranes ne peuvent plus assurer une conductivité convenable des protons à cause de leur inaptitude à retenir l'eau. Leur rendement diminue en fonction de la chute de l'humidité relative conjointe à l'élévation de la température. Or, l'application des piles à combustibles aux véhicules de transport nécessite l'utilisation de membranes pouvant fonctionner de façon satisfaisante à des températures supérieures à 90°C, en particulier à des températures comprises entre 120 et 150°C. Ce type de membranes n'existe pas actuellement sur le marché.

En terme de coût de fabrication enfin : pour permettre le développement massif de cette technologie et la généralisation de ces générateurs de puissance promis à un bel avenir, il subsiste le problème du coût de fabrication de la membrane électrolyte en tant que telle, mais également du coût de fabrication du coeur de pile à combustible (AME) lié à l'utilisation de platine comme catalyseur.

Les inventeurs se sont donc donnés pour but de mettre au point un nouveau matériau polymère hybride permettant de palier à ces différents inconvénients et pouvant notamment être utilisé à titre de membrane hybride électrolyte pour la conduction protonique dans des piles à combustible tout en présentant des propriétés améliorées par rapport aux membranes existantes, en particulier en termes de conductivité/performance, de gestion de l'eau, de température d'utilisation et en terme de stabilité thermique et chimique de fonctionnement et de durée de vie. Ce but est atteint par le matériau polymère hybride qui va être défini ci-après et qui constitue à ce titre le premier objet de la présente invention.

La présente invention a par conséquent pour objet un matériau polymère hybride, caractérisé par le fait qu'il se présente sous la forme d'un film et qu'il résulte de la polymérisation sol-gel par catalyse nucléophile, d'au moins un précurseur hybride de formule (I) suivante :

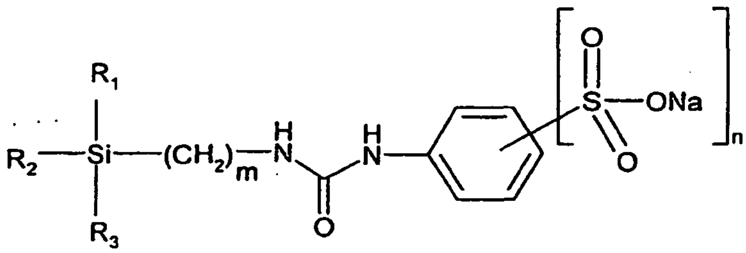

(I)

dans laquelle :

- $R_1$ et $R_3$ sont identiques et représentent un radical méthyloxy ou éthyloxy ;
- $R_2$ représente un radical méthyle, éthyle, méthyloxy, éthyloxy ou phényle ;
- m est un nombre entier variant de 2 à 6 inclusivement ;
- n est un nombre entier égal à 1 ou 2.

Ce matériau se présente sous la forme d'un film transparent et flexible.

Selon une forme de réalisation préférée, ledit matériau est obtenu par polymérisation d'au moins un précurseur de formule (I) ci-dessus dans lequel $R_1$ et $R_3$ représentent un radical éthyloxy.

Parmi les désignations mentionnées ci-dessus pour le radical $R_2$ des précurseurs de formule (I), le radical éthyloxy est particulièrement préféré.

Selon une forme de réalisation préférée de l'invention, les précurseurs de formule (I) sont choisis parmi les composés dans lesquels $R_1 = R_2 = R_3$ = éthyloxy.

Parmi les valeurs données pour m, on préfère utiliser les précurseurs de formule (I) dans lesquels m = 3.

Dans les précurseurs de formule (I) ci-dessus, lorsque n = 1, le groupement sulfonate de sodium occupe de préférence la position para du cycle phényle par rapport à l'atome de carbone lié à l'atome d'azote du groupement urée. Lorsque n = 2, les deux groupements sulfonates sont, de préférence, soit chacun en position méta par rapport à l'atome de carbone lié à l'atome d'azote du groupement urée, soit respectivement en position para et méta par rapport à l'atome de carbone lié à l'atome d'azote du groupement urée.

Ces préférences correspondent aux configurations (I-1) à (I-3) suivantes :

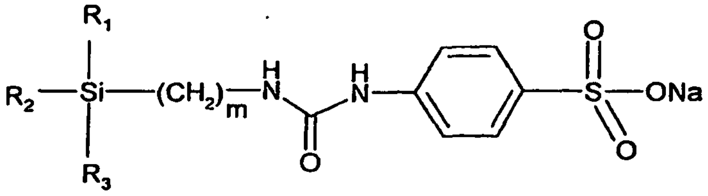

(I-1)

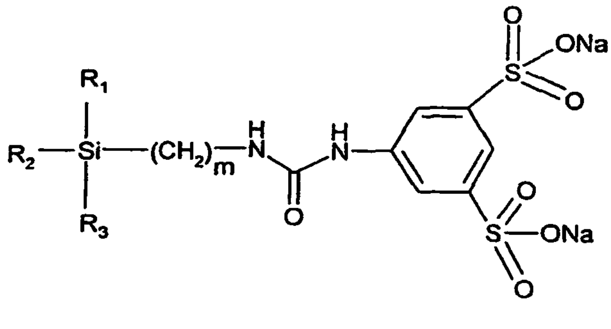

(I-2)

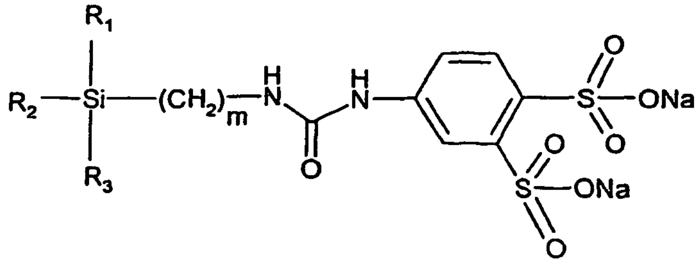

(I-3)

dans lesquelles $R_1$, $R_2$, $R_3$ et m ont les mêmes significations que celles indiquées ci-dessus pour les précurseurs de formule (I).

Parmi ces précurseurs, les composés dans lesquels n = 1, c'est-à-dire les précurseurs de formule (I-1), sont préférés.

Parmi les précurseurs de formule (I) ci- dessus, le 3- (triéthoxysilyl) propyl)- 3- (4- sodiumsulfonate) phényl) urée est particulièrement préféré ; ce précurseur répond à la formule suivante :

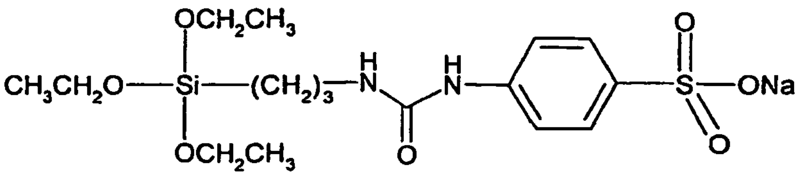

Ainsi, selon une forme de réalisation particulièrement avantageuse et préférée de l'invention, le matériau polymère hybride résulte de la polymérisation sol- gel par catalyse nucléophile du 3- (triéthoxysilyl) propyl)- 3- (4- sodiumsulfonate) phényl) urée.

Selon une variante de invention, la polymérisation du précurseur de formule (I) est réalisée en présence d'un précurseur plastifiant hybride. Dans ce cas, le matériau polymère hybride conforme à invention résulte de la copolymérisation sol-gel en catalyse nucléophile d'au moins un précurseur de formule (I) tel que défini précédemment et d'au moins un précurseur plastifiant de formule (II) suivante :

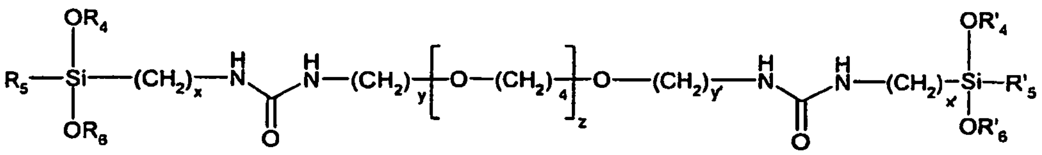

(II)

dans laquelle :

- $R_4$, $R'_4$, $R_6$ et $R'_6$ sont identiques et représentent un radical méthyle ou éthyle ;
- $R_5$ et $R'_5$, identiques ou différents, représentent un radical méthyle, éthyle, méthyloxy, éthyloxy ou phényle ;
- x et x', et y et y', identiques ou différents, sont des nombres entiers variant de 2 à 6 inclusivement ;
- z est un nombre entier variant de 8 à 16 inclusivement.

Selon une forme de réalisation préférée de l'invention, les précurseurs de formule (II) sont choisis parmi les composés dans lesquels $R_4$, $R'_4$, $R_6$ et $R'_6$, représentent un radical éthyle.

Selon une autre forme de réalisation préférée de l'invention, les précurseurs de formule (II) sont choisis parmi les composés dans lesquels les radicaux $R_5$ et $R'_5$ représentent un radical éthyloxy.

Parmi les valeurs données pour x, x', y et y', on préfère les précurseurs plastifiants de formule (II) dans lesquels x = x' = y = y' = 3.

Dans les précurseurs plastifiants de formule (II), z est de préférence un nombre entier variant de 12 à 14 inclusivement ; la valeur z = 13 étant tout particulièrement préférée.

Selon une forme de réalisation tout particulièrement préférée, les précurseurs plastifiants sont choisis parmi les composés de formule (II) symétriques par rapport au motif central polytétrahydrofurane.

A titre de précurseur plastifiant de formule (II) ci- dessus, on peut citer en particulier le bis- (3- (triéthoxysilyl) propylurée)- 3- poly (tétrahydrofurane) dans lequel le nombre (z) de motifs tétrahydrofurane = 13. Ce composé répond à la formule suivante :

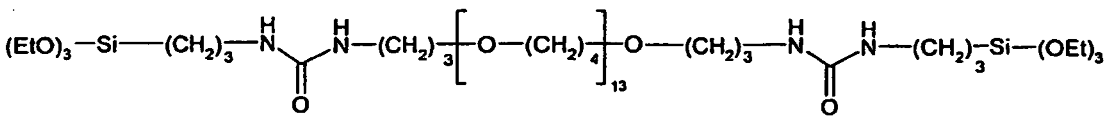

La présence d'au moins un précurseur plastifiant de formule (II) tel que défini ci-dessus permet d'augmenter la flexibilité, l'élasticité et fhydrophobicité du matériau polymère hybride conforme à l'invention.

Au sein du matériau polymère hybride conforme à l'invention, et lorsqu'il est utilisé, le précurseur plastifiant représente de préférence de 10 à 40 % en mole environ, plus particulièrement de 15 à 25 % en mole environ par rapport au nombre de moles de précurseur de formule (I).

Selon une forme de réalisation préférée de l'invention, le matériau polymère hybride présente une épaisseur comprise entre 100 et 200 $\mu$m inclusivement.

La présente invention a également pour objet le procédé de préparation du matériau polymère hybride se présentant sous la forme d'un film, et tel que défini précédemment, caractérisé par le fait qu'il comprend les étapes suivantes :

1) la dissolution, dans un solvant anhydre, d'au moins un précurseur hybride de formule (I) suivante :

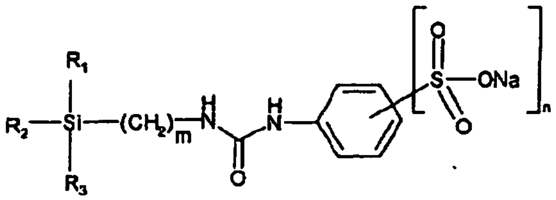

(I)

dans laquelle :

$R_1$ et $R_3$ sont identiques et représentent un radical méthyloxy ou éthyloxy ;
- $R_2$ représente un radical méthyle, éthyle, méthyloxy, éthyloxy ou phényle ;
- m est un nombre entier variant de 2 à 6 inclusivement ;
- n est un nombre entier égal à 1 ou 2,

2) la polymérisation sol-gel dudit précurseur hybride de formule (I) par ajout d'un catalyseur nucléophile choisi parmi les amines primaires et les dérivés d'imidazole, en présence d'eau pour obtenir un gel,
3) la mise en forme dudit gel,
4) le séchage dudit gel, pour obtenir un matériau solide sous la forme d'un film,

5) l'échange ionique $Na^+/H^+$ par immersion dudit film dans une solution acide et
6) le rinçage à l'eau dudit film pour éliminer toute trace d'acide.

Le solvant anhydre utilisé lors de l'étape 1) peut par exemple être choisi parmi le méthanol, le diméthylformamide (DMF) et le diméthylacétamide.
Les précurseurs hybrides de formule (I) mis en oeuvre au cours de l'étape 1) ne sont pas des produits commerciaux. Ils peuvent être préparés selon un procédé de synthèse comprenant les étapes suivantes :

i) la déshydratation totale d'un aminobenzène sulfonate de formule (III) suivante :

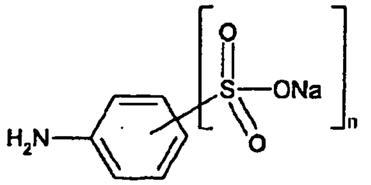

(III)

dans laquelle n est un nombre entier égal à 1 ou 2 pour obtenir un aminobenzène sulfonate anhydre de formule (III),
ii) la mise en solution de faminobenzène sulfonate anhydre de formule (III) obtenu ci-dessus à l'étape précédente dans un solvant organique anhydre choisi parmi le méthanol, le DMF, le N,N-diméthylacétamide et leurs mélanges ; le méthanol anhydre étant particulièrement préféré ;
iii) la mise sous vide et sous atmosphère inerte de ladite solution ;
iv) l'ajout à ladite solution, en excès et à température ambiante, d'un composé isocyanate anhydre de formule (IV) suivante :

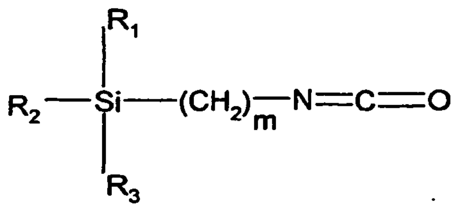

(IV)

dans laquelle :

- $R_1$, $R_2$, $R_3$ et m ont les mêmes significations que celles indiquées ci-dessus pour les précurseurs hybrides de formule (I) ;

v) la précipitation du précurseur de formule (I) attendu dans un solvant aprotique ; et
vi) le lavage dudit précurseur de formule (I) dans un solvant aprotique.

L'étape i) de déshydratation de l'aminobenzène sulfonate de formule (III) peut par exemple être réalisée selon le protocole suivant : 3 cycles successifs à 150°C sur une balance séchante, et 1 heure en cloche sous vide à 60°C.
Lors de l'étape iv), le composé isocyanate de formule (IV) est de préférence utilisé en un excès représentant de 1,2 à 1,3 équivalents par rapport à la quantité d'aminobenzène sulfonate de formule (III) mise en oeuvre.
Selon une forme de réalisation préférée de l'invention, à l'issue de l'étape iv), la solution contenant l'aminobenzène sulfonate de formule (III) et le composé isocyanate de formule (IV) est portée à une température comprise entre 60 et 80°C inclusivement, pendant une durée allant de préférence de 3 à 12 heures environ, de façon à augmenter le rendement de la réaction.
Le solvant aprotique utilisé lors des étapes v) et vi) est de préférence choisi parmi l'acétonitrile, l'éther, l'acétone et leurs mélanges. A ce titre, l'utilisation d'un mélange acétonitrile/éther (50/50 : v/v) est particulièrement avantageuse.
Après l'étape de lavage, le précurseur hybride de formule (I) ainsi obtenu peut être séché et stocké sous dessiccateur, selon des méthodes classiques (boîte à gant sous atmosphère inerte, desséchant $P_2O_5$, gel de silice...) ou bien être directement utilisé pour la préparation du matériau polymère hybride conforme à l'invention.
Selon une forme de réalisation préférée du procédé de préparation du matériau polymère hybride conforme à l'invention, la solution du ou des précurseurs hybrides de formule (I) de l'étape 1) renferme en outre au moins un précurseur plastifiant de formule (II) suivante :

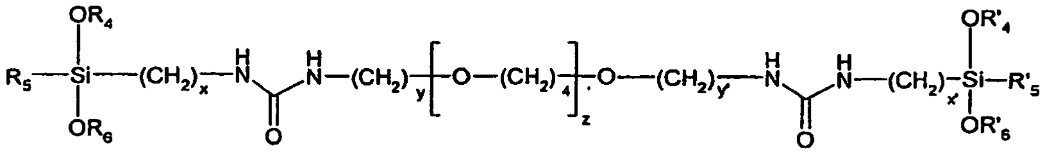

(II)

dans laquelle:

- $R_4$, $R'_4$, $R_6$ et $R'_6$ sont identiques et représentent un radical méthyle ou éthyle ;
- $R_5$ et $R'_5$, identiques ou différents, représentent un radical méthyle, éthyle, méthyloxy, éthyloxy ou phényle ;
- x et x', et y et y', identiques ou différents, sont des nombres entiers variant de 2 à 6 inclusivement ;
- z est un nombre entier égal variant de 8 à 16 inclusivement.

Selon une forme de réalisation préférée de l'invention, le précurseur plastifiant est choisi parmi les composés de formule (II) ci-dessus dans lesquels $R_4 = R'_4 = R_6 = R'_6$ = éthyle.

Parmi les radicaux mentionnés ci-dessus pour $R_5$ et $R'_5$, le radical éthyloxy est particulièrement préféré.

Parmi les valeurs données pour x, x', y et y', on préfère les précurseurs plastifiants de formule (II) dans lesquels x = x' = y = y' = 3.

Selon l'invention, z est de préférence un nombre entier variant de 12 à 14 inclusivement, la valeur z = 13 étant tout particulièrement préférée.

Selon une forme de réalisation tout particulièrement préférée, les précurseurs plastifiants sont choisis parmi les composés de formule (II) symétriques par rapport au motif central polytétrahydrofurane.

A titre de précurseur plastifiant de formule (II) ci- dessus, on peut citer en particulier le bis- (3- (triéthoxysilyl) propylurée)- 3- poly (tétrahydrofurane) dans lequel le nombre (z) de motifs tétrahydrofurane = 13.

Lorsqu'un précurseur plastifiant de formule (II) est utilisé, celui-ci représente de préférence de 10 à 40 % en mole environ, plus particulièrement de 15 à 25 % en mole environ par rapport au nombre de moles de composé de formule (I).

Parmi les catalyseurs nucléophiles utilisables lors de l'étape 2) du procédé de préparation du matériau polymère hybride conforme à l'invention, la benzylamine (amine primaire) est particulièrement préférée. Lors de cette étape, il se forme un gel dont la viscosité augmente au cours de l'avancement de la réaction de polymérisation.

La quantité de catalyseur nucléophile utilisée lors de l'étape 2) varie de préférence de 2 à 3 équivalents par rapport au nombre total de silicium présents dans le milieu réactionnel, la quantité d'eau étant quant à elle comprise entre 4 et 6 équivalents par rapport au nombre total de silicium.

L'étape 2) est de préférence réalisée à température ambiante.

Selon une forme de réalisation préférée de ce procédé, la mise en forme dudit gel lors de l'étape 3) est réalisée de façon à ce que son épaisseur soit comprise entre 100 et 200 $\mu$m environ inclusivement. Cela permet, lorsque le film polymère est ensuite utilisé comme électrolyte au sein d'une pile à combustible, d'augmenter les performances du système en fonctionnement (résistance intrinsèque plus faible).

Si on le souhaite, à l'issue de l'étape 4), le film polymère peut être séché et stocké sous dessiccateur. Dans ce cas, le film polymère devra être réhydraté progressivement, par exemple par immersions successives dans un milieu hydroalcoolique tel que par exemple un mélange éthanol/eau, avant de subir les étapes 5) d'échange ionique et 6) de rinçage nécessaires à son fonctionnement et donc à son utilisation.

L'échange ionique de l'étape 5) est de préférence réalisé par immersion du film polymère dans une solution d'acide chlorhydrique de molarité comprise entre 1 et 4 M inclusivement.

Le matériau polymère hybride conforme à l'invention présente les avantages suivants :

- il est facile à préparer selon un procédé de synthèse peu coûteux. Il peut facilement être produit en grande quantité sans aucun équipement lourd, et ne nécessite pas de conditions de sécurité particulières. Par ailleurs, il existe de nombreuses possibilités de mise en forme du gel : coulage *("tape- casting", "spincoating"),* pressage à chaud, extrudage, etc. De plus, la stratégie de synthèse par auto- assemblage supramoléculaire et polymérisation sol- gel par catalyse nucléophile (telle que décrite ci- dessus) conduit à l'obtention de films membranaires hautement organisés et cristallins,
- il présente d'excellentes propriétés de conductivité, 4 à 8 fois supérieures à celles de matériaux polymères à base de Nafion®, qui constituent habituellement les membranes classiquement utilisées dans la fabrication du coeur des piles à combustible. Ceci en fait par conséquent un matériau de choix pour une utilisation à titre de membrane polymère électrolyte conductrice de protons dans les piles à combustible de type PEMFC,

- il présente également des propriétés d'homogénéité, de stabilité chimique et thermique remarquables dues à une nanostructuration contrôlée au cours de sa synthèse et à la présence continue d'un squelette/matrice inorganique de silice (Si-O-Si). Les températures de dégradation de ces membranes sont supérieures à 330°C et elles présentent également de bonnes stabilités en environnement hydrolytique et/ou oxydant,
- il présente une architecture fine sous la forme de canaux ioniques hydrophiles de dimensions nanométriques au sein d'une matrice inorganique de silice. Cette architecture particulière est favorable à la rétention d'eau mais également au transport des protons. Cela peut présenter un avantage en termes de gestion de l'eau en augmentant ainsi sa capacité de rétention de l'eau à haute température (assèchement plus lent que d'autres électrolytes).

L'invention a donc également pour objet :

- l'utilisation d'au moins un matériau polymère hybride tel que défini précédemment, à titre de membrane électrolyte polymère conductrice de protons dans une pile à combustible, ainsi que
- une pile à combustible caractérisée par le fait qu'elle comporte, à titre d'électrolyte, au moins une membrane polymère conductrice de protons constituée d'un matériau polymère hybride tel que défini précédemment.

Lorsqu'il est utilisé comme membrane électrolyte au sein d'une pile à combustible, le matériau polymère hybride conforme à l'invention est généralement soit intercalé entre deux électrodes de platine (par exemple de type tissu de carbone platiné), soit directement recouvert par des nanoparticules de platine.

Pour cette application, l'utilisation d'un matériau polymère hybride résultant de la copolymérisation sol- gel en catalyse nucléophile du 3- (triéthoxysilyl) propyl)- 3- (4- sodiumsulfonate) phényl) urée et d'au moins un précurseur plastifiant de formule (II) tel que défini précédemment est particulièrement préférée. Dans ce cas, le précurseur plastifiant de formule (II) est de préférence le bis- (3- (triéthoxysilyl) propylurée)- 3- poly (tétrahydrofurane) dans lequel le nombre (z) de motifs tétrahydrofurane = 13.

Outre les dispositions qui précèdent, l'invention comprend encore d'autres dispositions qui ressortiront de la description qui va suivre, qui se réfère à un exemple de préparation d'un précurseur hybride de formule (I), à un exemple de préparation d'un matériau polymère électrolyte à base d'un précurseur hybride de formule (I), ainsi qu'aux figures 1 à 8 annexées dans lesquelles :

- la figure 1 représente le diffractogramme de poudre aux rayons X du précurseur 3- (triéthoxysilyl) propyl)- 3- (4- sodiumsulfonate) phényl) urée (1) (intensité en unités arbitraires en fonction de l'angle de diffraction (2θ) ) ;
- la figure 2 représente la structure cristallographique du précurseur (1) ;
- la figure 3 est une représentation schématique de l'organisation moléculaire du précurseur (1) sous la forme de dimère $(1)_2$;
- la figure 4 représente une photographie de microscopie électronique à transmission (figure 4A : grossissement x 80000 ; figure 4B : grossissement x 240000 montrant l'organisation submicronique du précurseur **(1)** à des échelles nanométriques ;
- la figure 5 représente les diffractogrammes aux rayons X de matériaux hybrides obtenus avec le précurseur **(1)**, en présence ou non d'un précurseur plastifiant (composé **3**) comparativement à un matériau ne faisant pas partie de l'invention obtenu en n'utilisant pas de précurseur **(1)** mais juste le précurseur plastifiant **(3)** : Matériau **A** obtenu avec le composé **(3)** uniquement, Matériau **D** : obtenu avec 40 % en poids de précurseur **(1)** et 60 % en poids de précurseur **(3)** et Matériau **H** : obtenu en utilisant uniquement le précurseur **(1)** sans précurseur plastifiant **(3)**. Sur cette figure, l'intensité (en unités arbitraires) est fonction de l'angle de diffraction (20) ;
- la figure 6 est une photographie en microscopie électronique à transmission d'un matériau polymère hybride constitué à 100 % par le précurseur **(1)** polymérisé par sol-gel (membrane **H** du Tableau 2 de l'exemple 2 ci-après) à un grossissement x 120000 (figure 6A : image en sous focalisation, figure 6B : image à la focalisation) ;
- la figure 7 représente les photographies de membranes hybrides conformes à l'invention celles-ci ayant été posées sur un support imprimé ; sur cette figure, les photographies (i) et (ii) sont celles de la membrane **D** du tableau 2 de l'exemple 2 décrit ci-après, composée à 40 % en poids de précurseur **(1)**, la photographie (iii) est celle de la membrane **F** du Tableau 2 de l'exemple 2 décrit ci-après, composée à 58 % en poids de précurseur **(1)** et la photographie (iv) est celle de la membrane **E** du Tableau 2 de l'exemple 2 décrit ci-après, composée à 48 % en poids de composé **(1)** ;
- la figure 8 montre une photo du matériau **H** composé uniquement par le précurseur **(1)** polymérisé par sol-gel (figure 8A), ainsi qu'une représentation schématique (figure 8B) d'un canal à protons existant au sein de la structure lamellaire d'un tel matériau hybride ;
- la figure 9 représente la capacité d'échange ionique (CEI) des membranes **A** à **H** à température ambiante en fonction du meq du composé **(3)** par gramme de membrane ;
- la figure 10 représente la conductivité protonique à 25°C et 100% d'humidité relative des membranes **A** à **H** et de

la membrane de référence de type Nafion® 117 ;

- la figure 11 représente le taux de gonflement et le nombre d'hydratation des membranes **A** à **H** à température ambiante en fonction du meq du composé **(3)** par gramme de membrane ;
- la figure 12 schématise le mécanisme de formation des membranes hybrides de l'invention :

  a) section d'une membrane hybride selon l'invention,
  b) assemblage schématique des nanodomaines lamellaires,
  c) formation de liaisons proton- canaux de conduction comprenant les groupements conducteurs- $SO_3H$- $H_2O$ ;

- la figure 13 représente la courbe d'Arrhenius des membranes en immersion mesurée par spectrométrie d'impédance électrochimique.

Il doit être entendu toutefois que ces exemples ne sont donnés qu'à titre purement illustratif de l'invention dont ils ne constituent en aucune manière une quelconque limitation.

**<u>EXEMPLE 1</u> : PRÉPARATION DU 3-(TRIÉTHOXYSILYL)PROPYL)-3-(4-SODIUMSULFONATE)PHÉNYL)URÉE (précurseur (1))**

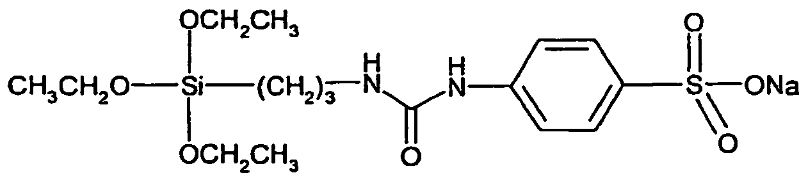

**(1)**

Dans un premier temps, du 4-aminobenzènesulfonate de sodium, 2 $H_2O$ **(2)** du commerce a été déshydraté selon le protocole suivant : 3 cycles successifs à 150°C sur une balance séchante puis 1 heure en cloche sous vide à 60°C où le produit déshydraté a été conservé jusqu'à son utilisation. Ensuite, 1 g de 4-aminobenzènesulfonate de sodium ainsi déshydraté (6,67 mmol ; 1 éq.) a été introduit dans un ballon contenant 30 ml de méthanol anhydre. La solution a été agitée, soniquée et mise sous vide puis sous atmosphère inerte ($N_2$). 1,65 g de 3-triéthoxysilylpropyl isocyanate anhydre (5,13 mmol ; 1,3 éq.) ont alors été ajoutés à cette solution au goutte à goutte sous agitation continue, puis l'ensemble a été porté au reflux à une température de 80°C durant 5 heures. En fin de réaction, la solution incolore obtenue a été concentrée sous vide puis soumise à précipitation et cristallisation par refroidissement lent jusqu'à une température de 4 °C dans un mélange acétonitrile/éther (50/50 : v/v). Le mélange a ensuite été filtré très rapidement, lavé plusieurs fois par des mélanges acétonitrile/toluène (75/25 : v/v) pour donner une pâte blanche qui a été immédiatement séchée à 60°C sous cloche à vide puis stockée en dessiccateur. Cet exemple a permis d'obtenir le précurseur **(1)** pur avec un rendement supérieur à 90 % sous la forme d'une poudre blanche hygroscopique.

$^1H$ RMN (300 MHz, DMSO) : $\delta$ (ppm) = 0,55 (t, J = 8,1 Hz, 2H) ; 1,14 (t, J = 6,3 Hz, 9H) ; 1,47 (m, J = 8,35 HZ, 2H) ; 3,04 (q, J = 7,5 Hz, 2H) ; 3,74 (q, J = 8,1 Hz, 6H) ; 6,36 (t, J = 5,4 Hz, 1H) ; 7,34 (d, J = 6,2 Hz, 2H) ; 7,46 (d, J = 6,4 Hz, 2H) ; 8,61 (s, 1H).

$^{13}C$ RMN (75 MHz, $CDCl_3$) : $\delta$ (ppm) = 7,4 ; 18,3 ; 23,5 ; 39,6 ; 57,5 ; 116,2 ; 126,5 ; 140,1 ; 141,5 ; 153,8.

Une analyse structurale par diffraction des rayons X de poudre du précurseur **(1)** ainsi obtenu a été réalisée à l'aide d'un diffractomètre de marque PHILIPS, modèle PanAnalytical X'pert Pro I, (mesures en mode Bragg-Brentano, monochromateur secondaire en graphite, détecteur X'celerator, rayonnement Cu). Le diffractogramme obtenu est représenté sur la figure 1 annexée sur laquelle l'intensité (en unités arbitraires) est fonction de l'angle de diffraction (2$\theta$). La structure cristallographique du précurseur **(1)** étant quant à elle représentée sur la figure 2 annexée.

Ces résultats permettent de mettre en évidence une forte cristallinité de ce précurseur. Ces résultats montrent que le précurseur **(1)** cristallise selon une maille monoclinique, groupe d'espace P2 l/c, ayant un volume moyen de 2194,79 $Å^3$ et les paramètres de maille suivants : $\alpha$= y = 90° ; $\beta$ = 116,4° ; a = 19,499 Å ; b = 5,014 Å et c = 22,449 Å.

Le diffractogramme du précurseur **(1)** tel que représenté sur la figure 1 présente un pic très intense aux petits angles, correspondant à une distance interplanaire de 3,42 nm et certainement à la formation de dimères **(1)**$_2$ au niveau moléculaire ainsi que cela est schématisé sur la figure 3 annexée. En effet, on peut considérer que cette distance correspond à la disposition en vis-à-vis de molécules voisines dont les fonctions sulfonates se retrouvent à proximité les unes des autres. De plus, l'auto-assemblage par liaisons hydrogène des groupements urée permet d'obtenir un agencement parallèle de la structure moléculaire des précurseurs **(1)** (superstructures isotopiques orientées).

Des analyses en microscopie électronique à transmission ont permis d'observer une très haute organisation au niveau submicronique (voir figure 4 annexée). En effet, ces clichés sur l'organisation du précurseur **(1)** à des échelles nanométriques (Figures 4A et 4B) mettent en évidence la formation de canaux moléculaires continus disposés parallèlement les uns par rapport aux autres.

**<u>EXEMPLE 2</u> : PRÉPARATION DE MATÉRIAUX ÉLECTROLYTE HYBRIDES A BASE DE 3-(TRIÉTHOXYSILYL) PROPYL)-3-(4-SODIUMSULFONATE) PHÉNYL)URÉE ET D'UN PRÉCURSEUR HYBRIDE PLASTIFIANT**

<u>1) Etape préliminaire : Synthèse d'un précurseur hybride plastifiant : le bis-(3-(triéthoxysilyl)propylurée)-3-poly(tétrahydrofuranne) (3)</u>

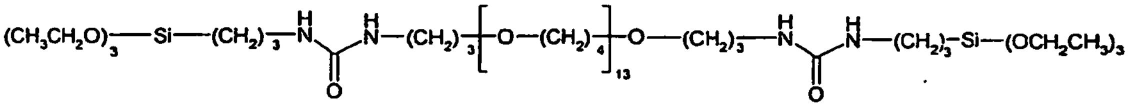

**(3)**

2 g (1 éq. ; 1, 82 mmol) de poly (tétrahydrofurane)- bis (3- aminopropyl) vendu par la société Aldrich (référence 436577 ; $M_n$ = 1100 soit 13 motifs tétrahydrofuranne) ont été dissous dans 30 ml d'une solution de chloroforme anhydre. La solution a été agitée, soniquée, et mise sous vide puis sous atmosphère inerte ($N_2$) . On a ensuite ajouté à cette solution 0, 94 g (2, 1 éq ; 3, 8 mmol) de 3- triéthoxysilylpropylisocyanate au goutte- à- goutte et sous agitation continue, puis l'ensemble a été porté au reflux à 80°C pendant 20 heures. Le mélange réactionnel a alors été évaporé sous vide pendant 4 heures à une température de 80°C pour donner une solution visqueuse translucide. Cette dernière a été lavée plusieurs fois avec 3 x 20 ml d'un mélange acétonitrile/ éther (50/50 : v/v) et le précurseur hybride plastifiant

**(3)** attendu a été récupéré sous forme d'un gel visqueux après centrifugation et décantation.

$^1H$ RMN (300 MHz, DMSO) : δ (ppm) = 0, 51 (t, J = 9, 2 Hz) ; 1, 11 (t, J = 6, 2 Hz) ; 1, 36 (m) ; 1, 50 (m) ; 1, 59 (m) ; 2, 95 (q, J = 6, 1 Hz) ; 3, 02 (q, J = 6, 3 Hz) ; 3, 15 (s) ; 4, 42 (s) ; 3, 32 (s) ; 3, 74 (q, J = 9, 4 Hz) ; 5, 73 (t, J = 5, 6 Hz) ; 5, 81 (t, J = 5, 3 Hz) .

<u>2) Synthèses de membranes électrolytes polymères</u>

La synthèse des matériaux polymères hybrides a été réalisée selon un procédé de polymérisation sol-gel avec une catalyse nucléophile en utilisant de la benzylamine comme catalyseur. Le milieu réactionnel est formé par le précurseur **(1)** préparé ci-dessus à l'exemple 1 à titre de précurseur hybride fonctionnel de formule (I) et le précurseur **(3)** tel que préparé ci-dessus à l'étape préliminaire, à titre de précurseur hybride plastifiant de formule (II).
Le précurseur **(1)** apportant la fonctionnalité (conduction) au système et le précurseur **(3)** permettant d'ajuster les propriétés physiques du matériau (flexibilité).
Pour ce faire, le précurseur **(1)** a été dissous dans 5 ml d'une solution de méthanol anhydre, puis sous agitation vigoureuse, on a ajouté goutte- à- goutte, le précurseur **(3)** . Les quantités de chacun des précurseurs utilisés pour préparer les matériaux polymères hybrides **A** à **G** ci- après sont présentées dans le tableau 1 ci- dessous :

**<u>TABLEAU 1</u>**

| | Composition de la membrane | | |
|---|---|---|---|
| **Matériau** | **% en poids de précurseur (1)** | **% en poids de précurseur (3)** | **% en moles de précurseur (1)** |
| **A (*)** | 0 | 100 | 0 |
| **B** | 20 | 80 | 47,4 |
| **C** | 30 | 70 | 60,8 |
| **D** | 40 | 60 | 64,3 |
| **E** | 48 | 52 | 70,6 |

(suite)

| Matériau | Composition de la membrane | | % en moles de précurseur (1) |
|---|---|---|---|
| | % en poids de précurseur (1) | % en poids de précurseur (3) | |
| **F** | 58 | 42 | 78,3 |
| **G** | 78 | 22 | 84,2 |
| **H** | 100 | 0 | 100 |
| (*) **:** Matériau ne faisant pas partie de la présente invention | | | |

Chacune des solutions a ensuite été homogénéisée par sonication puis agitation pendant 30 min. On a ensuite ajouté 3 éq. de benzylamine (quantité correspondante calculée par rapport au nombre total de groupements triéthoxysilane présents dans le milieu : $nSi(OEt)_3$ total = 1 éq), ainsi que de l'eau (6 éq.) afin d'amorcer les réactions d'hydrolyse. L'ensemble a été agité vigoureusement pendant 45 min. Au final, la viscosité a augmenté progressivement pour conduire à un gel visqueux.

Une membrane I contenant 35% en poids de composé (1) a également été préparée.

3) Mise en forme des matériaux polymères

Chacun des gels ainsi obtenu a ensuite été coulé dans un Pétri circulaire en Téflon®, séché à température ambiante pendant 24 heures puis à l'étuve selon le cycle thermique suivant : 8 heures à 40°C ; 4 heures à 60°C ; 4 heures à 80°C, 2 heures à 100°C et 1 heure à 120°C. Une fois séchés, les matériaux polymères hybrides ont été démoulés puis refroidis et progressivement réhydratés dans un mélange éthanol/eau (95/5 : v/v). On a ensuite procédé à un échange ionique $Na^+/H^+$ en plongeant les matériaux dans une solution d'acide chlorhydrique 1M pendant 24 heures puis en les plongeant plusieurs fois dans des bains d'eau déionisée (3 fois pendant 24 heures) et en les rinçant de manière à éliminer tout excès d'acide jusqu'à obtenir un pH neutre et constant (proche de 7) pour la solution de rinçage.

4) Résultats

Les propriétés électrochimiques et thermiques des matériaux **A** à **G** ainsi obtenus figurent ci-après dans le Tableau 2, dans lequel celles d'un matériau polymère de type Nafion® 117 d'une épaisseur de 175 $\mu$m ont également été mentionnées à titre comparatif. Ont ainsi été mesurés :

**1) Capacité d'échange ionique (CEI)** : la CEI est une mesure caractéristique, pour matériau donné, qui définit le potentiel d'échange d'ions rapporté à la masse. Elle représente ainsi le nombre d'équivalents de sites échangeurs d'ions contenus dans une quantité déterminée de matériau. On l'exprime généralement en milliéquivalent d'ions par gramme (meq /g) de matériau sec sous forme acide (dans cet exemple le contre-ion est alors un proton $H^+$). Elle a été déterminée pour tous les matériaux par des titrations acido-basique classiques. Expérimentalement, on a équilibré chacun des matériaux électrolytes (échangeurs d'ions) sous forme acide ($H^+$) dans une solution 1 molaire de chlorure de sodium (NaCl) pendant 24 heures, il y a alors eu libération des protons et remplacement par les cations $Na^+$. On a alors pu doser la solution contenant les protons par une solution basique de type hydroxyde de sodium (NaOH). En utilisant un pH-mètre ainsi qu'un indicateur coloré adapté (tel que par exemple le rouge de phénol), on a pu déterminer précisément l'équivalence. La CEI est exprimée par l'équation suivante :

$$CEI(meq/g) = 1000 \times \frac{C_{NaOH} \times V_{eq}}{M}$$

dans laquelle $C_{NaOH}$ est la concentration de la solution basique soude (en mol/L), $V$ (en L) représente le volume de soude nécessaire pour réaliser l'équivalence et $M$ représente la masse (en g) du matériau sec.
Au final, cela a permis de caractériser l'accessibilité aux sites échangeurs d'ions ainsi que leur nombre réel (par rapport à une valeur théorique) ;

2**) Taux de gonflement du matériau électrolyte** : il est exprimé en pourcentage et correspond à une expansion volumique lorsqu'il est équilibré dans une solution aqueuse (voire organique). Ainsi, les sites échangeurs d'ions et les contre-ions peuvent être solvatés, tandis que les espaces libres résultant de la réticulation et de l'agglomération

des chaînes polymériques peuvent se remplir de solvant. Le taux de gonflement, exprimé en pourcentage, se définit par le rapport de la masse de solvant contenu à l'intérieur du matériau sur la masse sèche de ce dernier. Le taux de gonflement est calculé par l'équation suivante :

$$Tg(\%) = \frac{m_{humide} - m_{sèche}}{m_{sèche}} \times 100$$

dans laquelle $m_{humide}$ est la masse (en g) du matériau après gonflement dans le solvant et $m_{sèche}$ est la masse (en g) du matériau avant gonflement dans le solvant.
Expérimentalement, on a déterminé le taux de gonflement par mesure de la prise/perte hydrique. Pour cela, le matériau a été pesé à l'état sec puis, après immersion dans de l'eau déionisée pendant 24 heures et essuyage des faces, et enfin après séchage du matériau à l'étuve à 100°C pendant 24 heures pour déterminer la quantité d'eau adsorbée. Cette mesure peut également être effectuée en utilisant une balance séchante (marque Mettler, Sartorius,...) et en mesurant les variations de masse entre le matériau à l'état hydraté ou sec.
**3) Température de dégradation** : elle a été déterminée graphiquement sur les thermogrammes des matériaux réalisés par analyse thermogravimétrique (ATG) et analyse thermique différentielle (ATD). Les mesures ont été effectuées sous azote ($N_2$), avec une température de chauffe de 10°C/min avec des appareils vendus par la société TA Instruments sous les références ATG 2950 Haute Résolution et SDT 2960 Simultanée.
**4) Conductivité** : elle a été déterminée par spectroscopie d'impédance. Il s'agit d'une généralisation de la loi d'Ohm par mesure de l'impédance complexe Z en fonction de la fréquence (ω), du matériau soumis à une perturbation sinusoïdale (tension d'entrée) ce qui permet d'accéder à sa résistance électrique R selon l'équation suivante :

$$Z(\omega) = \frac{U(\omega)}{I(\omega)} = |Z| \exp^{(-j\Phi)} = Z'(\omega) + jZ''(\omega) = \mathrm{Re}(Z) + \mathrm{Im}(Z)$$

Les mesures ont été réalisées à une température de 25°C et à 100 % d'humidité relative (HR), avec des impédancemètres de type SOLARTRON® 1260 (analyseur) et 1255 (interface) en utilisant les logiciels Zplot® et Zview®. La plage de fréquence balayée est variable, et généralement comprise entre 0,1 Hz et 10 MHz. On a fait varier l'amplitude du signal sinusoïdal en tension entre 1 et 1000 mV, domaine de linéarité couramment admis pour les conducteurs ioniques. Pour l'étude des propriétés électrochimiques de l'électrolyte, on a utilisé à titre d'électrodes deux phases de mercure liquide avec contact direct, contenues dans une cellule en téflon à deux compartiments entre lesquels le matériau a été maintenu. Des fils de platine plongeant dans le mercure ont été reliés aux appareils de mesure. Le mercure a été renouvelé pour chaque mesure et il a permis notamment d'obtenir de très bons contacts et d'optimiser l'interface entre les deux électrodes et chacun des matériaux étudiés.

On a obtenu des représentations graphiques correspondant à des diagrammes de Nyquist (représentation en impédance dans un repère orthonormé). Ces diagrammes d'impédance (non représentés) décrivent, dans la gamme de fréquences étudiée, l'évolution de l'opposé de la partie imaginaire de l'impédance en fonction de la valeur de la partie réelle. La partie réelle Z' de l'impédance (en abscisse) et l'opposé de la partie imaginaire -Z" (en ordonnée) ont été exprimées en Ohms (Ω). Ainsi, on a déterminé graphiquement la valeur de la résistance intrinsèque globale de l'échantillon R (Ω), ce qui correspond à l'extrapolation ou l'intersection de la courbe avec l'axe des abscisses. En corrélant cette dernière avec les facteurs géométriques du matériau, à savoir l'épaisseur (e) et la surface exposée (S), on a pu calculer la conductivité totale exprimée en $s.cm^{-1}$ selon l'équation suivante :

$$\sigma(S.cm^{-1}) = \frac{e(cm)}{R(\Omega) \times S(cm^2)}$$

Les caractérisations et mesures expérimentales sur les matériaux **A** à **G** conformes à l'invention et sur la membrane commerciale de type Nafion® 117 ont été réalisées dans les mêmes conditions, avec les mêmes appareils et protocoles opératoires (y compris les étapes d'hydratation, d'échange ionique en présence d'acide, et de rinçage).

Les résultats obtenus figurent dans le Tableau 2 ci-après :

**TABLEAU 2**

| Membrane | Epaisseur (µm) | $C_1$ (% en poids) | $r_1$ (%) | CEI (meq/g) | Taux de gonflement (%) | Nombre d'hydratation $\lambda$ | Température de dégradation (°C) | Conductivité $\sigma$ ($mS.cm^{-1}$) |
|---|---|---|---|---|---|---|---|---|
| **A (*)** | 255 | 0 | 0 | 0 | 6 | 0 | 373 | 0,002 |
| **B** | 212 | 20 | 47,4 | 0,44 | 18 | 22 | 392 | 4,7 |
| **C** | 239 | 30 | 60,8 | 0,74 | 33 | 24 | 386 | 15,7 |
| **D** | 187 | 40 | 64,3 | 0,88 | 44 | 28 | 388 | 32 |
| **E** | 115 | 48 | 70,6 | 0,97 | 52 | 29 | 334 | 48,4 |
| **F** | 211 | 58 | 78,3 | 1,26 | 61 | 27 | 356 | 98,5 |
| **G** | 164 | 78 | 84,2 | 1,46 | 68 | 26 | 376 | 160,2 |
| **H** | - | 100 | 100 | - | - | - | - | - |
| **Nafion® 117** | 175 | - | - | 0,85 | 25 | 16 | 395 | 22,4 |

(*) Matériau ne faisant pas partie de invention

Les valeurs $C_1$, $r_1$ et $\lambda$ du tableau 2 représentent :

- $C_1$ est la concentration en composé **(1)**, et elle est calculée grâce à la relation : $C_2$ (% en poids) = 100 - $C_1$,
- $r_1$ est le ratio molaire du composé **(1)**, et
- $\lambda$ est le nombre d'hydratation : $\lambda = (n_{H2O}/n_{SO3H})$ .

La membrane de référence A obtenue à partir du composé **(3)** présente une capacité d'échange ionique (CEI) nulle, et une très faible conductivité protonique pouvant être attribuée au réseau de silice inorganique et à l'absence de groupements fonctionnels.

Les résultats présentés dans le Tableau 2 ci-dessus montrent également que le matériau **D** ne contenant que 40 % en poids de précurseur **(1)** présente, pour un taux de gonflement 1,75 fois plus grand, une température de dégradation et une capacité d'échange ionique équivalentes, une conductivité plus importante (x 1,45) que celle de la membrane de référence de type Nafion® 117. Les matériaux **F** et **G** ayant une composition supérieure en précurseur (1), respectivement 58 et 78 % en poids, présentent quant à eux de légères différences en terme de gonflement et de tenue thermique mais d'un autre coté présentent des capacités d'échange ionique bien supérieures et, ce qui est le plus intéressant, des conductivités 4 à 8 fois plus importantes que la membrane de référence de type Nafion® 117.

Des analyses structurales par diffraction des rayons X des matériaux **A**, **D** et **H** ainsi obtenus ont ensuite été réalisés à l'aide d'un diffractomètre vendu par la société PHILIPS, modèle PanAnalytical X'pert Pro I, (mesures en mode Bragg-Brentano, monochromateur secondaire en graphite, détecteur X'celerator, rayonnement Cu). Ces analyses mettent en évidence une importante organisation des matériaux polymères hybrides.

La figure 5 annexée représente les diffractogrammes des matériaux **A**, **D** et **H** sur lesquels l'intensité en unités arbitraires est exprimée en fonction de l'angle de diffraction : 20.

On observe tout d'abord qu'en l'absence de précurseur (**1**) (précurseur hybride de formule (I)), (matériau **A** ne faisant pas partie de l'invention), le matériau obtenu ne présente aucun pic de diffraction et il est donc amorphe. On remarque également que lorsqu'on augmente la teneur massique en précurseur (**1**), des pics de diffractions émergent du diffractogramme (matériaux **D** et **H**) **:** cela se manifeste par des pics discrets très intenses dont le principal (plan de type 001) se situe aux petits angles et correspond à une distance interplanaire centrée sur 3 nm. Les deux autres pics moins intenses sont des pics harmoniques en relation directe avec le premier, et correspondent au plan de type 002 et de type 004, ce qui démontre la présence d'un réseau lamellaire s'organisant en canaux moléculaires d'une largeur moyenne de 3 nm. A cet égard, la figure 6 annexée représente une photographie en microscopie électronique à transmission du matériau **H** à un grossissement x 120000 (figure 6A : image en sous focalisation, figure 6B : image à la focalisation). Cette figure met en évidence la structuration en canaux parallèles nanométriques (3 nm), au sein du matériau **H**.

Ainsi, la forte cristallinité du précurseur (**1**) de départ est transférée au sein du réseau hybride avec la formation de matériaux hautement structurés. Dans le réseau hybride, on retrouve les précurseurs (**1**) polymérisés et figés (formation du squelette/ matrice inorganique par liaisons de type Si- O- Si), dont les fonctions sulfoniques sont orientées vers l'intérieur du canal. L'appariement des proches voisins génère une architecture finale entièrement condensée dans laquelle les canaux nanométriques et parallèles permettent de définir un espace préférentiel pour le transport des espèces ioniques et particulièrement pour la conduction des protons ($H^+$) .

La figure 7 annexée montre des photographies des matériaux hybrides **D** (figures 7i et 7ii), **F** (figure 7iii) et **E** (figure 7iv), ceux-ci ayant été posés sur un support imprimé.

La figure 8 montre une photo du matériau **H** composé uniquement par le précurseur (**1**) (figure 8A) ainsi que qu'une représentation schématique (figure 8B) d'un canal à protons existant au sein de la matrice hybride d'un tel matériau qui révèle alors une structure lamellaire. Pour ce type de structure, composée de plans successifs, on peut définir que le squelette inorganique $(Si\text{-}O\text{-}Si)_n$ forme les murs/parois des canaux de conduction, tandis que l'intérieur des canaux est formé par le regroupement des parties organiques et plus particulièrement des fonctions sulfonates.

On observe sur la figure 9 que la Capacité d'Echange Ionique (CEI) des membranes **B** à **H** mesurées sont très proches des valeurs théoriques calculées à partir des quantités molaires (en $meq.g^{-1}$) du composé (3), ce qui signifie que les protons des groupements sulfonates sont accessibles pendant le titrage et participent au procédé de conduction protonique.

La figure 10 montre que la membrane **D** ne contenant que 40% en poids du composé (1) atteint une conductivité protonique supérieure à celle du Nafion® 117 pour une Capacité d'Echange Ionique (CEI) égale et un taux de gonflement plus élevé. La supériorité des conductivités protoniques mesurées pour les membranes **D** à **H** peut être attribuée à l'augmentation du nombre de nanodomaines ayant une concentration élevée en groupements sulfonates (J. Power Sources 2006, 154, 115-123).

La figure 11 met en évidence une augmentation linéaire du taux de gonflement des membranes **B** à **H**, pendant

que le nombre d'hydratation $\lambda$ reste constant.

Ces données sont confirmées par la figure 12 qui montre la formation des canaux. Pendant que le taux de gonflement augmente de façon constante avec la Capacité d'Echange Ionique (CEI), une augmentation plus prononcée de la conductivité avec la Capacité d'Echange Ionique (CEI) est enregistrée pour les membranes **E** à **H** par rapport aux membranes **B** à **D**. Pour les membranes E à **H**, la concentration élevée en composé (1) allonge la densité et l'orientation des groupements sulfonates, conduisant ainsi à un réseau conducteur hautement concentré de conductivité protonique élevée. La conductivité protonique des membranes PEM (Polymer Electrolyte Membrane) est un paramètre clef qui dépend fortement de la Capacité d'Echange Ionique (CEI) et de la température, et dont l'énergie d'activation Ea donne un aperçu du mécanisme de transport. Un des inconvénients du Nafion® 117 est son application difficile sur des membranes DMFC (Direct Methanol Fuel Cells), la perméabilité du méthanol étant directement liée à la structure du Nafion® 117 dont les domaines de conduction ionique contribuent à la diffusion rapide du méthanol (J. Power Sources, 2008, 175, 256-260).

La membrane **I** présente une conductivité $\sigma$ = 25 mS.cm$^{-1}$ presque égale à la conductivité du Nafion® 117 ($\sigma$ = 22,4 mS.cm$^{-1}$ déterminée expérimentalement). La perméabilité au méthanol de la membrane **I** ($P_M$ = 4,1 $\times$ 10$^{-7}$ cm$^2$/s à 25°C) est réduite de 23% par rapport à la perméabilité au méthanol du Nafion® 117 ($P_M$ = 18,1 $\times$ 10$^{-7}$ cm$^2$/s à 25°C). Idéalement, une membrane DMFC (Direct Methanol Fuel Cells) devrait présenter une haute conductivité protonique et une faible perméabilité au méthanol, la sélectivité de la membrane pour le transport protonique dans le méthanol étant égale à $\beta = \sigma/P_M$. Pour la membrane **I** : $\beta$ = 61 $\times$ 10$^{-6}$ mS.s.cm$^{-1}$, cette sélectivité étant approximativement dix fois supérieure à celle du Nafion® 117. Cette augmentation est due à la diminution de la perméabilité au méthanol, puisque la membrane **I** et le Nafion® 117 présentent la même conductivité protonique.

L'énergie d'activation Ea est déterminée selon la loi d'Arrhenius :

$$\sigma = \sigma_0 \exp(-Ea/RT)$$

où :

- Ea est l'énergie d'activation d'Arrhenius,
- T est la température, et
- R est la constante des gaz parfait (valeur usuelle : R = 8, 314 J.mol$^{-1}$.K$^{-1}$)

Comme le montre la figure 13, les valeurs obtenues sont approximativement :

- pour la membrane **I** : Ea = 17,46 kJ.mol$^{-1}$,
- pour le Nafion® 117 : Ea = 13,32 kJ.mol$^{-1}$.

La valeur de l'énergie d'activation Ea obtenue pour la membrane I par rapport à celle du Nafion® 117 suggère la présence d'une superstructure plus compacte pour la membrane **I** dans laquelle les molécules d'eau (et également les molécules de méthanol) sont moins mobiles (par rapport à la structure du Nafion® 117).

## Revendications

1. Matériau polymère hybride, **caractérisé par le fait qu'**il se présente sous la forme d'un film et qu'il résulte de la polymérisation sol-gel par catalyse nucléophile, d'au moins un précurseur hybride de formule (I) suivante :

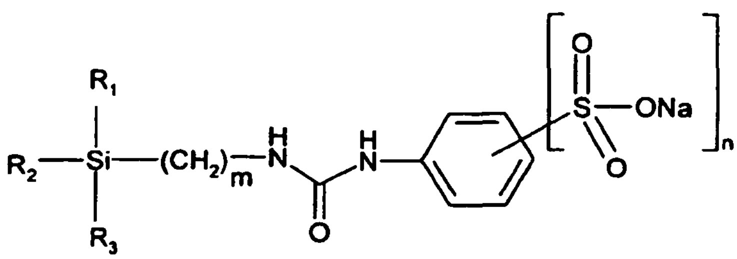

(I)

dans laquelle :

- $R_1$ et $R_3$ sont identiques et représentent un radical méthyloxy ou éthyloxy ;
- $R_2$ représente un radical méthyle, éthyle, méthyloxy, éthyloxy ou phényle ;
- m est un nombre entier variant de 2 à 6 inclusivement ;
- n est un nombre entier égal à 1 ou 2.

**2.** Matériau selon la revendication 1, **caractérisé par le fait que** les précurseurs de formule (I) sont choisis parmi les composés dans lesquels $R_1 = R_2 = R_3$ = éthyloxy.

**3.** Matériau selon la revendication 1 ou 2, **caractérisé par le fait que** les précurseurs de formule (I) sont choisis parmi les composés dans lesquels m = 3.

**4.** Matériau selon l'une quelconque des revendications précédentes, **caractérisé par le fait que** les précurseurs de formule (I) sont choisis parmi les composés dans lesquels n = 1 et le groupement sulfonate de sodium occupe la position para du cycle phényle par rapport à l'atome de carbone lié à l'atome d'azote du groupement urée.

**5.** Matériau selon l'une quelconque des revendications 1 à 3, **caractérisé par le fait que** les précurseurs de formule (I) sont choisis parmi les composés dans lesquels n = 2, et les deux groupements sulfonates sont, soit chacun en position méta par rapport à l'atome de carbone lié à l'atome d'azote du groupement urée, soit respectivement en position para et méta par rapport à l'atome de carbone lié à l'atome d'azote du groupement urée.

**6.** Matériau selon l'une quelconque des revendications 1 à 4, **caractérisé par le fait que** les précurseurs de formule (I) sont choisis parmi les composés dans lesquels n = 1.

**7.** Matériau polymère selon la revendication 1, **caractérisé par le fait qu'**il résulte de la polymérisation sol- gel par catalyse nucléophile du 3- (triéthoxysilyl) propyl)- 3- (4- sodiumsulfonate) phényl) urée.

**8.** Matériau selon l'une quelconque des revendications précédentes, **caractérisé par le fait qu'**il résulte de la copolymérisation sol-gel en catalyse nucléophile d'au moins un précurseur de formule (I) tel que définie à l'une quelconque des revendications 1, et 2 à 7 et d'au moins un précurseur plastifiant de formule (II) suivante :

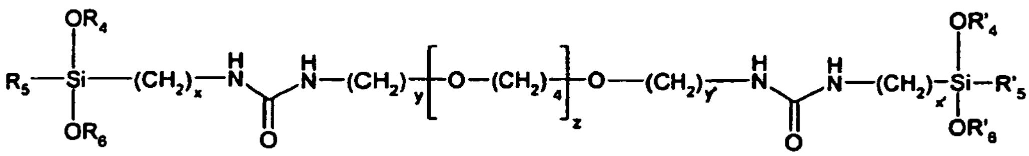

(II)

dans laquelle :

- $R_4$, $R'_4$, $R_6$ et $R'_6$ sont identiques et représentent un radical méthyle ou éthyle ;
- $R_5$ et $R'_5$, identiques ou différents, représentent un radical méthyle, éthyle, méthyloxy, éthyloxy ou phényle ;
- x et x', et y et y', identiques ou différents, sont des nombres entiers variant de 2 à 6 inclusivement ;
- z est un nombre entier variant de 8 à 16 inclusivement.

**9.** Matériau selon la revendication 8, **caractérisé par le fait que** les précurseurs de formule (II) sont choisis parmi les composés dans lesquels $R_4$, $R'_4$, $R_6$ et $R'_6$, représentent un radical éthyle.

**10.** Matériau selon la revendication 8 ou 9, **caractérisé par le fait que** les précurseurs de formule (II) sont choisis parmi les composés dans lesquels les radicaux $R_5$ et $R'_5$ représentent un radical éthyloxy.

**11.** Matériau selon l'une quelconque des revendications 8 à 10, **caractérisé par le fait que** les précurseurs de formule (II) sont choisis parmi les composés dans lesquels x = x' = y = y' = 3.

**12.** Matériau selon l'une quelconque des revendications 8 à 11, **caractérisé par le fait que** dans les précurseurs plastifiants de formule (II), z est un nombre entier variant de 12 à 14 inclusivement.

**13.** Matériau selon l'une quelconque des revendications 8 à 12, **caractérisé par le fait que** le précurseur de formule

(II) est le bis- (3- (triéthoxysilyl) propylurée)- 3- poly (tétrahydrofurane) dans lequel le nombre (z) de motifs tétrahydrofurane = 13.

**14.** Matériau selon l'une quelconque des revendications 8 à 12, **caractérisé par le fait que** ledit précurseur plastifiant représente de 10 à 40 % en mole, par rapport au nombre de moles de précurseur de formule (I).

**15.** Matériau selon l'une quelconque des revendications précédentes, **caractérisé par le fait qu'**il présente une épaisseur comprise entre 100 et 200 $\mu$m inclusivement.

**16.** Procédé de préparation d'un matériau polymère hybride se présentant sous la forme d'un film, et tel que défini à l'une quelconque des revendications précédentes, **caractérisé par le fait qu'**il comprend les étapes suivantes :

1) la dissolution, dans un solvant anhydre, d'au moins un précurseur hybride de formule (I) suivante :

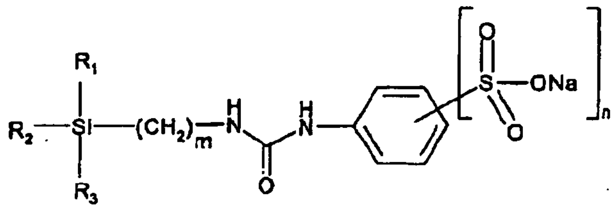

(I)

dans laquelle :

- $R_1$ et $R_3$ sont identiques et représentent un radical méthyloxy ou éthyloxy ;
- $R_2$ représente un radical méthyle, éthyle, méthyloxy, éthyloxy ou phényle ;
- m est un nombre entier variant de 2 à 6 inclusivement ;
- n est un nombre entier égal à 1 ou 2,

2) la polymérisation sol-gel dudit précurseur hybride de formule (I) par ajout d'un catalyseur nucléophile choisi parmi les amines primaires et les dérivés d'imidazole, en présence d'eau pour obtenir un gel,
3) la mise en forme dudit gel,
4) le séchage dudit gel, pour obtenir un matériau solide sous la forme d'un film,
5) l'échange ionique $Na^+/H^+$ par immersion dudit film dans une solution acide et
6) le rinçage à l'eau dudit film pour éliminer toute trace d'acide.

**17.** Procédé selon la revendication 16, **caractérisé par le fait que** la solution du ou des précurseurs hybrides de formule (I) de l'étape 1) renferme en outre au moins un précurseur plastifiant de formule (II) tel que défini ci-dessus à l'une quelconque des revendications 8 à 13.

**18.** Procédé selon la revendication 16 ou 17, **caractérisé par le fait que** la quantité de catalyseur nucléophile utilisée lors de l'étape 2) varie de 2 à 3 équivalents par rapport au nombre total de silicium présents dans le milieu réactionnel, et que la quantité d'eau est comprise entre 4 et 6 équivalents par rapport au nombre total de silicium.

**19.** Procédé selon l'une quelconque des revendications 16 à 18, **caractérisé par le fait que** l'échange ionique de l'étape 5) est réalisé par immersion du gel dans une solution d'acide chlorhydrique de molarité comprise entre 1 et 4 M inclusivement.

**20.** Utilisation d'au moins un matériau polymère hybride tel que défini ci-dessus à l'une quelconque des revendications 1 à 15, à titre de membrane électrolyte polymère conductrice de protons dans une pile à combustible.

**21.** Pile à combustible **caractérisée par le fait qu'**elle comporte, à titre d'électrolyte, au moins une membrane polymère conductrice de protons constituée d'un matériau polymère hybride tel que défini à l'une quelconque des revendications 1 à 15.

## Patentansprüche

1. Polymerhybridmaterial, **dadurch gekennzeichnet, dass** es in Form eines Films vorliegt und dass es sich durch Sol-Gel-Polymerisation durch nukleophile Katalyse von mindestens einem Precursorhybrid der folgenden Formel (I) ergibt:

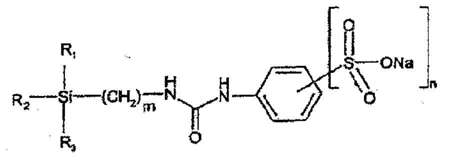

(I)

worin:

- $R_1$ und $R_3$ identisch sind und für eine Methyloxy- oder Ethyloxygruppe stehen;
- $R_2$ für eine Methyl-, Ethyl-, Methyloxy-, Ethyloxy- oder Phenylgruppe steht;
- m eine ganze Zahl von einschließlich 2 bis einschließlich 6 ist;
- n eine ganze Zahl und gleich 1 oder 2 ist.

2. Material nach Anspruch 1, **dadurch gekennzeichnet, dass** die Precursor der Formel (I) ausgewählt sind aus den Verbindungen, bei denen $R_1 = R_2 = R_3$ = Ethyloxy ist.

3. Material nach Anspruch 1 oder 2, **dadurch gekennzeichnet, dass** die Precursor der Formel (I) ausgewählt sind aus den Verbindungen, bei denen m = 3 ist.

4. Material nach einem der voranstehenden Ansprüche, **dadurch gekennzeichnet , dass** die Precursor der Formel (I) ausgewählt sind aus den Verbindungen, bei denen n = 1 ist und die Natriumsulfonatgruppe die para-Position des Phenylrings bezüglich des Kohlenstoffatoms, das an das Stickstoffatom der Harnstoffgruppe gebunden ist, einnimmt.

5. Material nach einem der Ansprüche 1 bis 3, **dadurch gekennzeichnet, dass** die Precursor der Formel (I) ausgewählt sind aus den Verbindungen, bei denen n = 2 ist und sich die beiden Sulfonatgruppen entweder jeweils in der meta-Position bezüglich des Kohlenstoffatoms, das an das Stickstoffatom der Harnstoffgruppe gebunden ist, befinden, oder sich in der para- bzw. meta-Position bezüglich des Kohlenstoffatoms, das an das Stickstoffatom der Harnstoffgruppe gebunden ist, befinden.

6. Material nach einem der Ansprüche 1 bis 4, **dadurch gekennzeichnet, dass** die Precursor der Formel (I) ausgewählt sind aus den Verbindungen, bei denen n = 1 ist.

7. Polymermaterial nach Anspruch 1, **dadurch gekennzeichnet, dass** es sich ergibt durch die Sol- Gel- Polymerisation durch nukleophile Katalyse von 3- (Triethoxysilyl) propyl)- 3- (4- natriumsulfonato) phenyl) harnstoff.

8. Material nach einem der voranstehenden Ansprüche, **dadurch gekennzeichnet, dass** es sich ergibt durch die Sol-Gel-Copolymerisation unter nukleophiler Katalyse von mindestens einem Precursor der Formel (I), wie in einem der voranstehenden Ansprüche 1 und 2 bis 7 definiert, und mindestens einem weichmachenden Precursor der folgenden Formel (II):

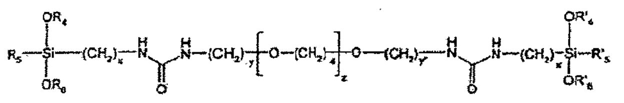

(II)

worin:

- $R_4$, $R'_4$, $R_6$ und $R'_6$ identisch sind und für eine Methyl-oder Ethylgruppe stehen;
- $R_5$ und $R'_5$ identisch oder verschieden sind und für eine Methyl-, Ethyl-, Methyloxy-, Ethyloxy- oder Phenylgruppe stehen;
- x und x' und y und y' gleich oder verschieden sind und ganze Zahlen von einschließlich 2 bis einschließlich 6 sind;
- z eine ganze Zahl von einschließlich 8 bis einschließlich 16 ist.

**9.** Material nach Anspruch 8, dadurch g**ekennzeichnet**, dass die Precursor der Formel (II) ausgewählt sind aus den Verbindungen, bei denen $R_4$, $R'_4$, $R_6$ und $R'_6$ für eine Ethylgruppe stehen.

**10.** Material nach Anspruch 8 oder 9, **dadurch gekennzeichnet, dass** die Precursor der Formel (II) ausgewählt sind aus den Verbindungen, bei denen die Gruppen $R_5$ und $R'_5$ für eine Ethy_oxygruppe stehen.

**11.** Material nach einem der Ansprüche 8 bis 10, **dadurch gekennzeichnet, dass** die Precursor der Formel (II) ausgewählt sind aus den Verbindungen, bei denen x = x' = y = y' = 3 ist.

**12.** Material nach einem der Ansprüche 8 bis 11, **dadurch gekennzeichnet, dass** bei den weichmachenden Precursorn der Formel (II) z für eine ganze Zahl von einschließlich 12 bis einschließlich 14 steht.

**13.** Material nach einem der Ansprüche 8 bis 12, **dadurch gekennzeichnet, dass** der Precursor der Formel (II) bis-(3- (Triethoxysilyl) propylharnstoff)- 3- poly (tetrahydrofuran) ist, worin die Zahl (z) der Tetrahydrofuraneinheiten = 13 ist.

**14.** Material nach einem der Ansprüche 8 bis 12, **dadurch gekennzeichnet, dass** der weichmachende Precursor 10 bis 40 Mol-%, bezogen auf die Molzahl des Precursors der Formel (I), ausmacht.

**15.** Material nach einem der voranstehenden Ansprüche, **dadurch gekennzeichnet, dass** es eine Dicke zwischen 100 und 200 μm (einschließlich) aufweist.

**16.** Verfahren zur Herstellung eines Hybridpolymermaterials, das in Form eines Films vorliegt und so wie in einem der voranstehenden Ansprüche definiert ist, **dadurch gekennzeichnet, dass** es folgenden Stufen umfasst:

1) das Auflösen in einem wasserfreien Lösungsmittel von mindestens einem Hybridprecursor der folgenden Formel (I):

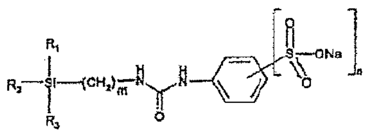
(I)

worin:

- $R_1$ und $R_3$ identisch sind und für eine Methyloxy- oder Ethyloxygruppe stehen;
- $R_2$ für eine Methyl-, Ethyl-, Methyloxy-, Ethyloxy- oder Phenylgruppe steht;
- m eine ganze Zahl von einschließlich 2 bis einschließlich 6 ist;
- n eine ganze Zahl gleich 1 oder 2 ist,

2) die Sol-Gel-Polymerisation des genannten Hybridprecursors der Formel (I) durch Zugeben eines nukleophilen Katalysators, ausgewählt aus primären Aminen und Imidazolderivaten in Gegenwart von Wasser, um ein Gel zu erhalten,
3) die Formung des genannten Gels,
4) die Trocknung des Gels, um ein festes Material in Form eines Films zu erhalten,
5) den $Na^+/H^+$- Ionenaustausch durch Eintauchen des Films in eine saure Lösung und
6) das Waschen des Films mit Wasser, um sämtliche Säurespuren zu entfernen.

**17.** Verfahren nach Anspruch 16, **dadurch gekennzeichnet, dass** die Lösung des Hybridprecursors oder der Hybridprecursoren der Formel (I) in der Stufe 1) des Weiteren mindestens einen weichmachenden Precursor der Formel (II), wie voranstehend in einem der Ansprüche 8 bis 13 definiert, umfasst.

**18.** Verfahren nach Anspruch 16 oder 17, **dadurch gekennzeichnet, dass** die Menge des in der Stufe 2) verwendeten

nukleophilen Katalysators im Bereich von 2 bis 3 Äquivalenten, bezogen auf die Gesamtzahl der Siliciumatome in dem Reaktionsmedium, liegt und dass die Wassermenge im Bereich von 4 bis 6 Äquivalenten, bezogen auf die Gesamtzahl von Siliciumatomen, liegt.

**19.** Verfahren nach einem der Ansprüche 16 bis 18, **dadurch gekennzeichnet , dass** der Ionenaustausch in der Stufe 5) bewerkstelligt wird durch Eintauchen des Gels in eine Salzsäurelösung mit einer Molarität im Bereich von 1 bis 4 M (einschließlich).

**20.** Verwendung mindestens eines Hybridpclymermaterials, wie voranstehend in einem der Ansprüche 1 bis 15 definiert, als polymere Elektrolytmembran, die protonenleitend ist, in einer Brennstoffzelle.

**21.** Brennstoffzelle, **dadurch gekennzeichnet, dass** sie als Elektrolyt mindestens eine protonenleitende Pclymermembran umfasst, die aus einem Hybridpolymermaterial besteht, wie in einem der Ansprüche 1 bis 15 definiert.

## Claims

**1.** A hybrid polymer material, **characterised in that** it is in the form of a film and it results from the sol-gel polymerisation through nucleophilic catalysis of at least one hybrid precursor of formula (I) below:

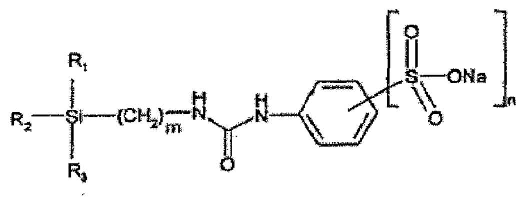

(I)

in which:

- $R_1$ and $R_3$ are the same and represent a methyloxy or ethyloxy radical;
- $R_2$ represents a methyl, ethyl, methyloxy, ethyloxy or phenyl radical;
- m is a whole number from 2 to 6 inclusive;
- n is a whole number equal to 1 or 2.

**2.** A material according to claim 1, **characterised in that** the precursors of formula (I) are selected from compounds in which $R_1 = R_2 = R_3$ = ethyloxy.

**3.** A material according to claim 1 or 2, **characterised in that** the precursors of formula (I) are selected from the compounds in which m = 3.

**4.** A material according to any one of the preceding claims, **characterised in that** the precursors of formula (I) are selected from the compounds in which n = 1 and the sodium sulphonate group occupies the para position in the phenyl ring with respect to the carbon atom bound to the nitrogen atom of the urea group.

**5.** A material according to any one of claims 1 to 3, **characterised in that** the precursors of formula (I) are selected from the compounds in which n = 2 and the two sulphonate groups are each either in a meta position with respect to the carbon atom bound to the nitrogen atom of the urea group or in para and meta positions respectively with respect to the carbon atom bound to the nitrogen atom of the urea group.

**6.** A material according to any one of claims 1 to 4, **characterised in that** the precursors of formula (I) are selected from the compounds in which n = 1.

**7.** A polymer material according to claim 1, **characterised in that** it results from the sol- gel polymerisation through nucleophilic catalysis of 3- (triethoxysilyl) propyl)- 3- (4- sodiumsulphonate) phenyl) urea.

**8.** A material according to any one of the preceding claims, **characterised in that** it results from the sol-gel copolymerisaticn through nucleophilic catalysis of at least one precursor of formula (I) as defined in any one of claims 1 and

2 to 7 and at least one plasticising precursor of formula (II) below:

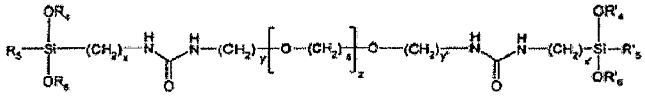

(II)

in which:

- $R_4$, $R'_4$, $R_6$ and $R'_6$ are the same and represent a methyl or ethyl radical;
- $R_5$ and $R'_5$, which may be the same or different, represent a methyl, ethyl, methyloxy, ethyloxy or phenyl radical;
- x and x' and y and y', which may be the same or different, are whole numbers from 2 to 6 inclusive;
- z is a whole number from 8 to 16 inclusive.

**9.** A material according to claim 8, **characterised in that** the precursors of formula (II) are selected from the compounds in which $R_4$, $R'_4$, $R_6$ and $R'_6$ represent an ethyl radical.

**10.** A material according to claim 8 or 9, **characterised in that** the precursors of formula (II) are selected from the compounds on which the $R_5$ and $R'_5$ radicals represent an ethyloxy radical.

**11.** A material according to any one of claims 8 to 10, **characterised in that** the precursors of formula (II) are selected from the compounds in which x = x' = y = y' = 3.

**12.** A material according to any one of claims 8 to 11, **characterised in that** in the plasticising precursors of formula (II), z is a whole number from 12 to 14 inclusive.

**13.** A material according to any one of claims 8 to 12, **characterised in that** the precursor of formula (II) is bis- (3-(triethoxysilyl) propylurea)- 3- poly (tetrahydrofuran) in which the number (z) of tetrahydrofuran moieties = 13.

**14.** A material according to any one of claims 8 to 12, **characterised in that** the plasticising precursor represents 10 to 40% in moles with respect to the number of moles of precursor of formula (I).

**15.** A material according to any one of the preceding claims, **characterised in that** it has a thickness of between 100 and 200 μm inclusive.

**16.** A process for the preparation of a hybrid polymer material in the form of a film as defined in any one of the preceding claims, **characterised in that** it comprises the following stages:

1) dissolution in an anhydrous solvent of at least one hybrid precursor of formula (I) below:

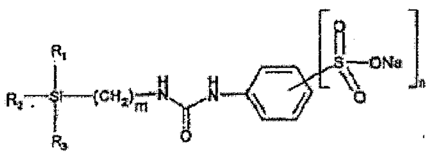

(I)

in which:

- $R_1$ and $R_3$ are the same and represent a methyloxy or ethyloxy radical;
- $R_2$ represents a methyl, ethyl, methyloxy, ethyloxy or phenyl radical;
- m is a whole number from 2 to 6 inclusive;
- n is a whole number equal to 1 or 2,

2) sol-gel polymerisation of the hybrid precursor of formula (I) through the addition of a nucleophilic catalyst selected from primary amines and imidazole derivatives, in the presence of water to obtain a gel,
3) shaping of the gel,

4) drying of the gel to obtain a solid material in the form of a film,
5) $Na^+/H^+$ ion exchange through immersing the film in an acid solution and
6) rinsing the film with water to remove all traces of acid.

**17.** A process according to claim 16, **characterised in that** the solution of the hybrid precursor or precursors of formula (I) in stage 1) further includes at least one plasticising precursor of formula (II) as defined in any one of claims 8 to 13.

**18.** A process according to claim 16 or 17, **characterised in that** the quantity of nucleophilic catalyst used during stage 2) varies from 2 to 3 equivalents with respect to the total number of silicons present in the reaction medium, and that the quantity of water is between 4 and 6 equivalents with respect to the total number of silicons.

**19.** A process according to any one of claims 16 to 18, **characterised in that** the ion exchange in stage 5) is performed by immersing the gel in a solution of hydrochloric acid having a molarity of between 1 and 4 M inclusive.

**20.** Use of at least one hybrid polymer material as defined above in any one of claims 1 to 15 as a protonconducting polymer electrolyte membrane in a fuel cell.

**21.** A fuel cell **characterised in that** it comprises as electrolyte at least one proton-conducting polymer membrane comprising a hybrid polymer material as defined in any one of claims 1 to 15.

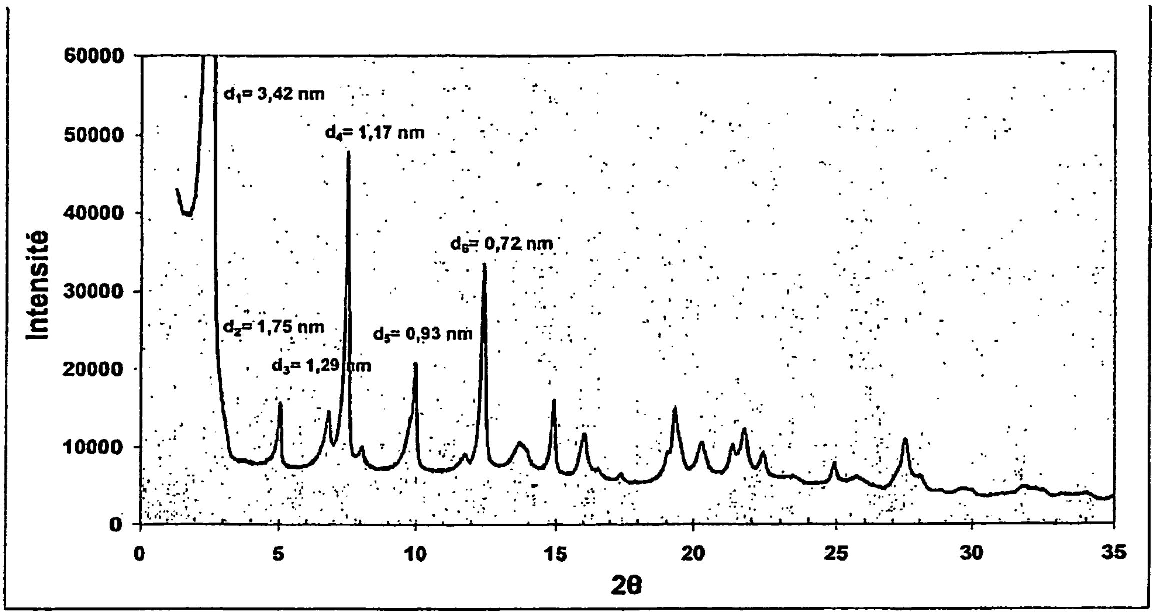


FIGURE 1

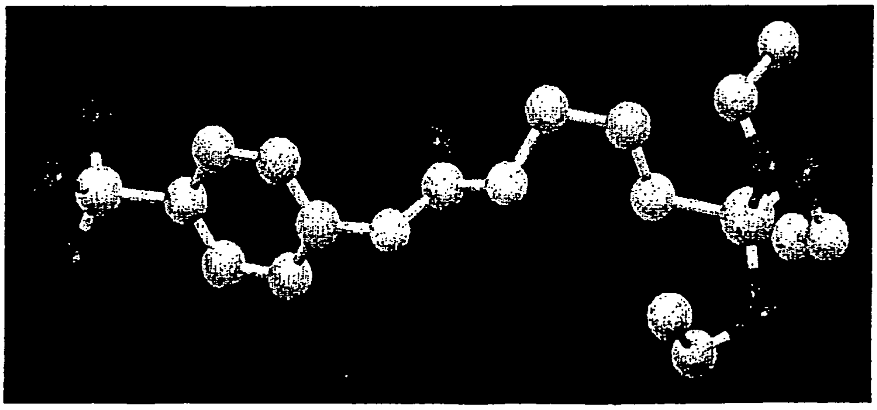

FIGURE 2

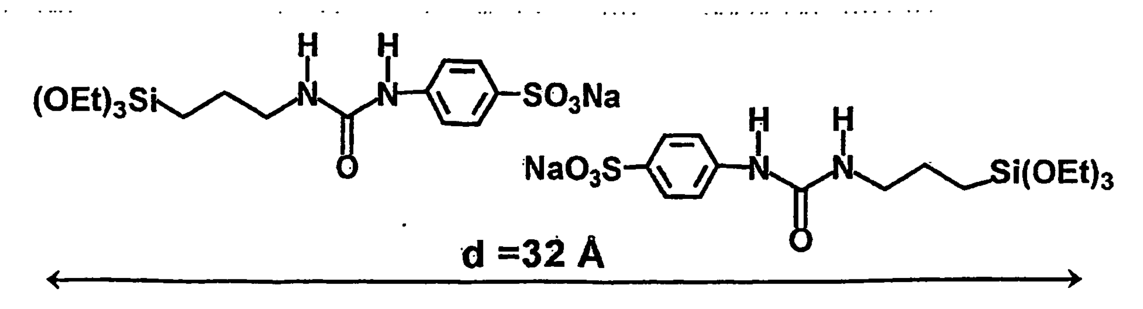


FIGURE 3

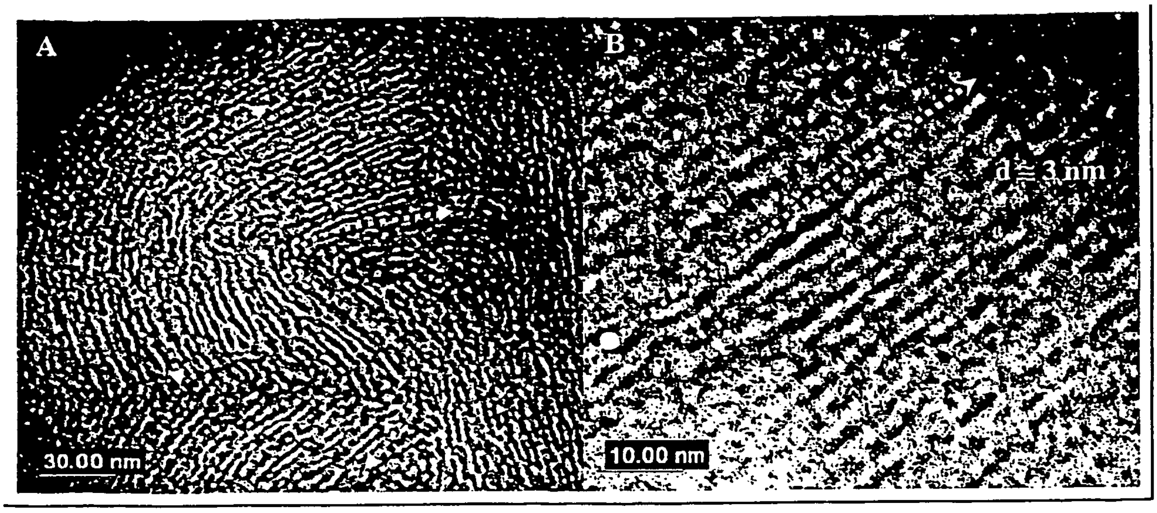


FIGURE 4

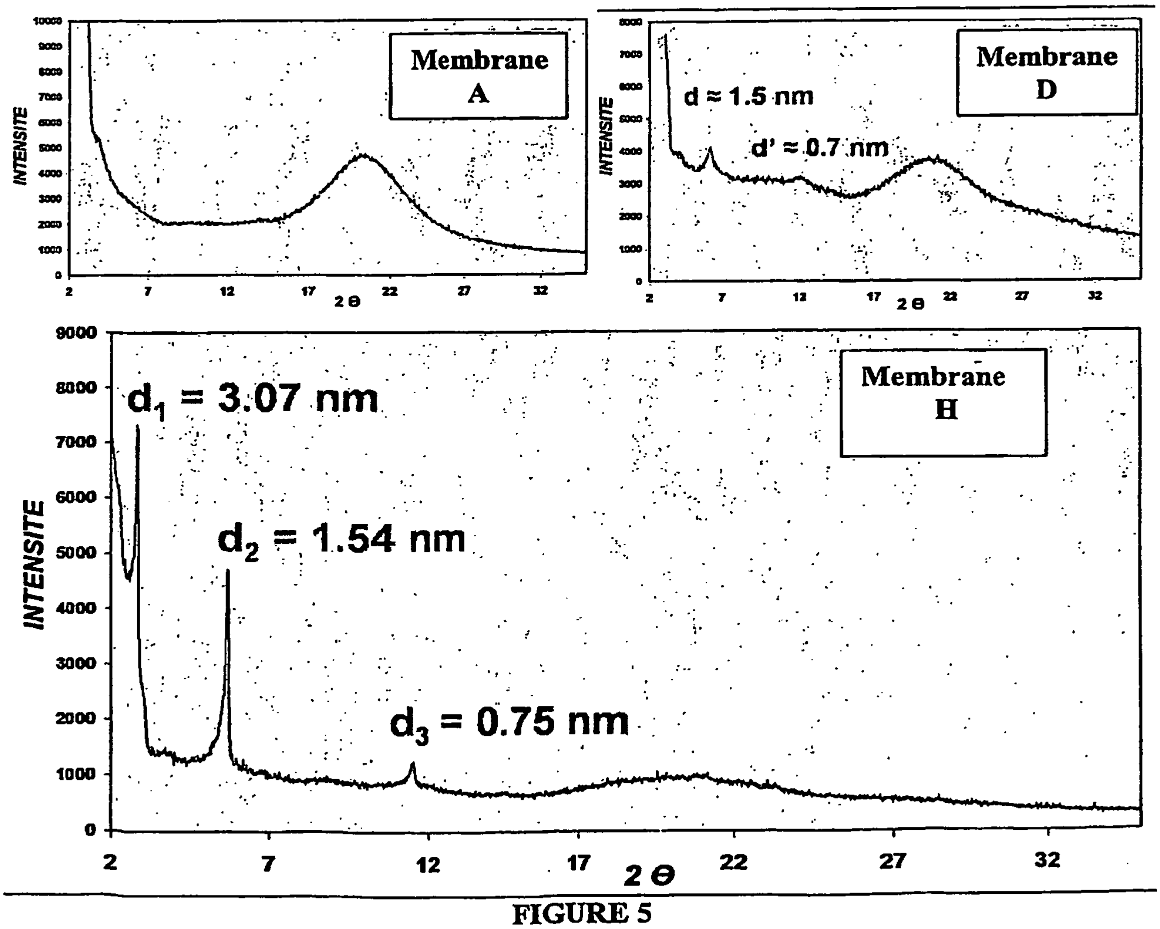


FIGURE 5

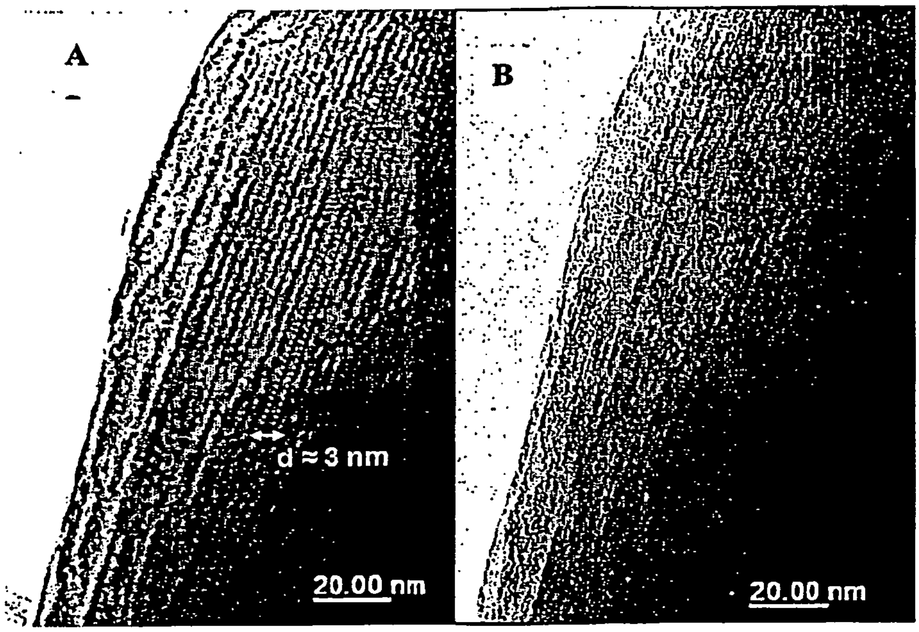


FIGURE 6

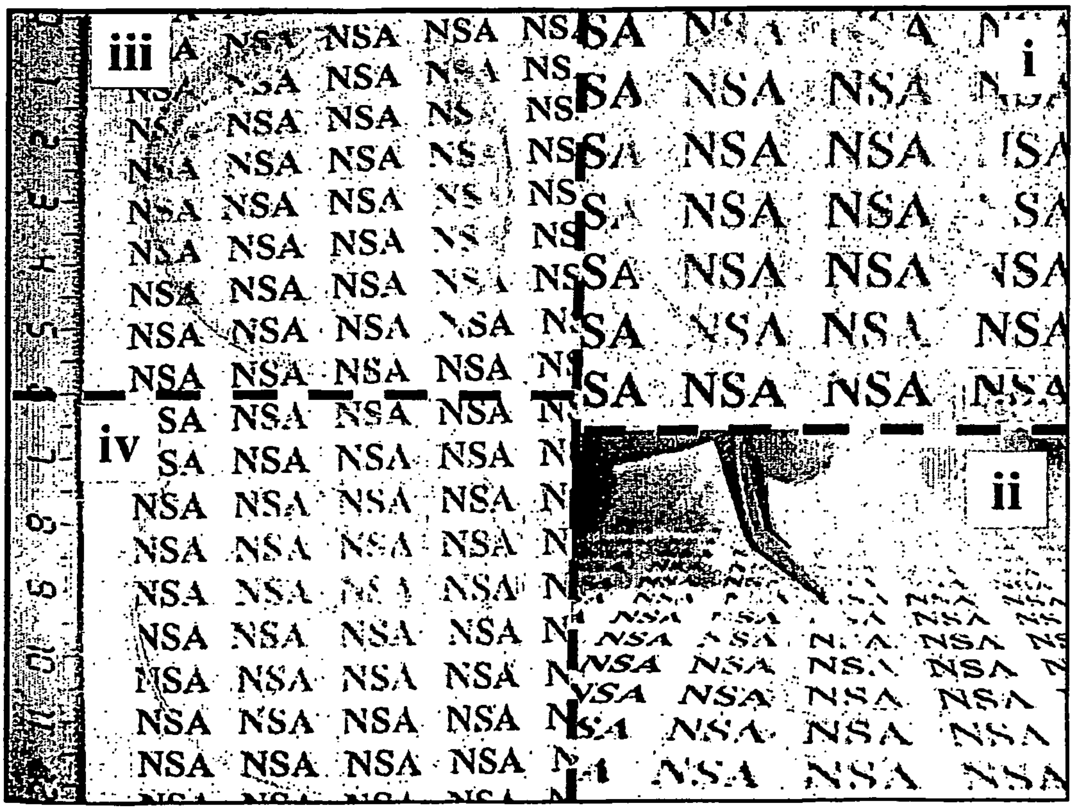


FIGURE 7

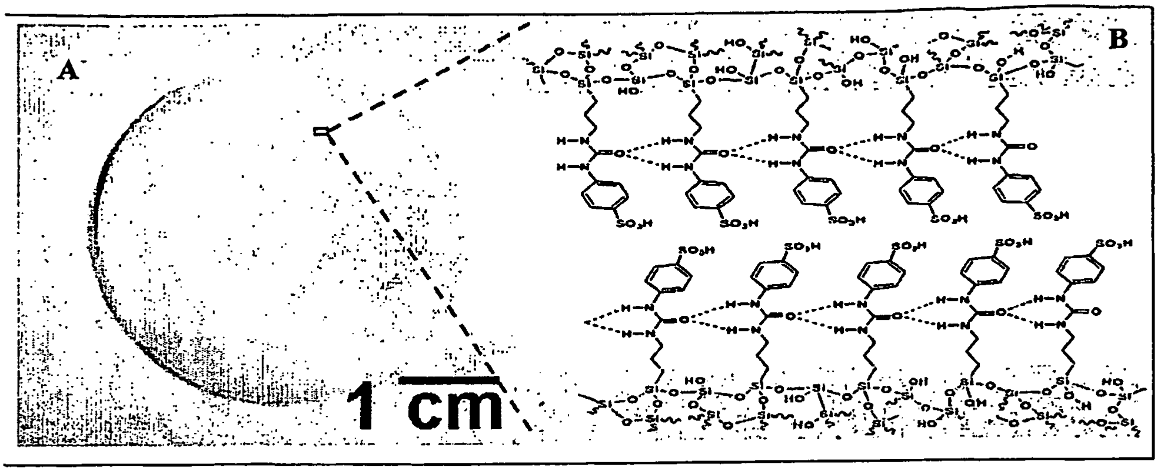


FIGURE 8

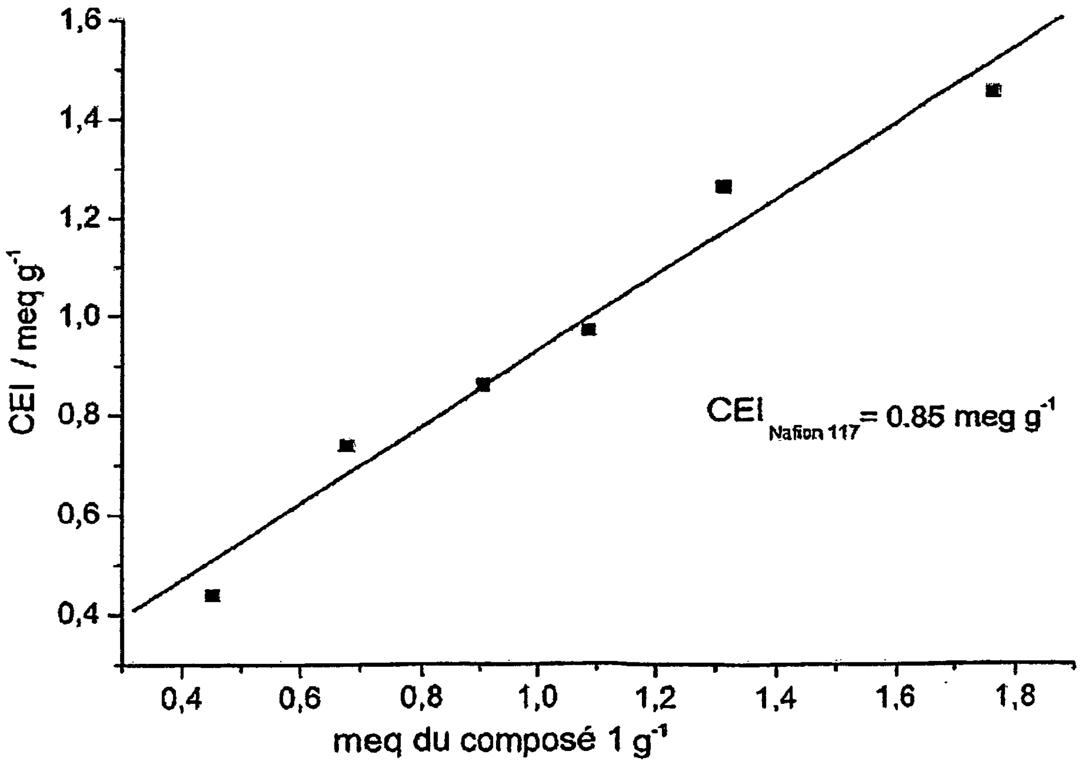


FIGURE 9

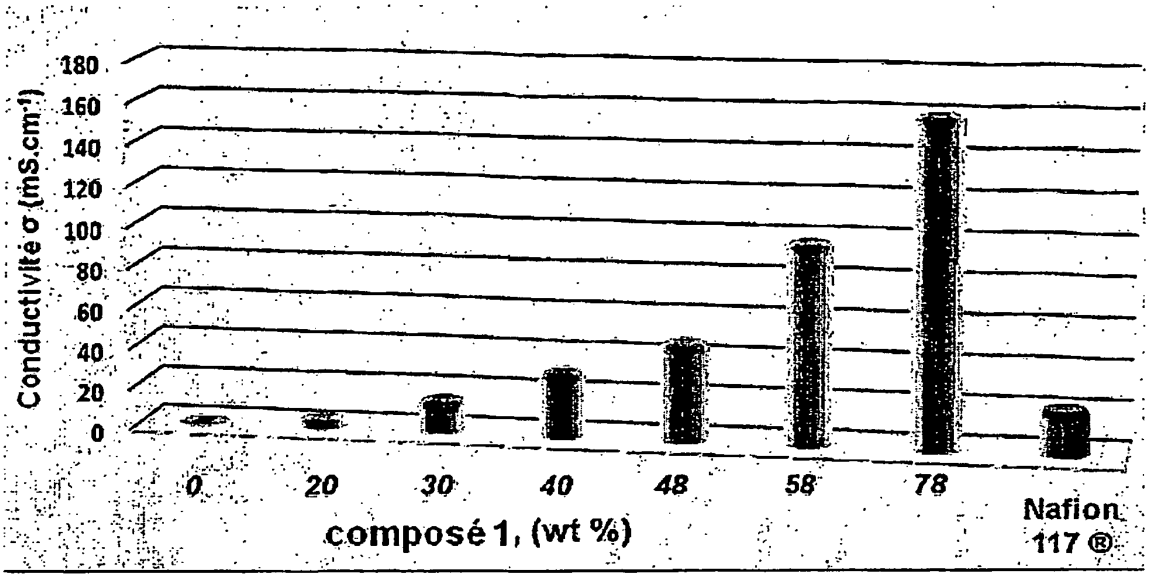


FIGURE 10

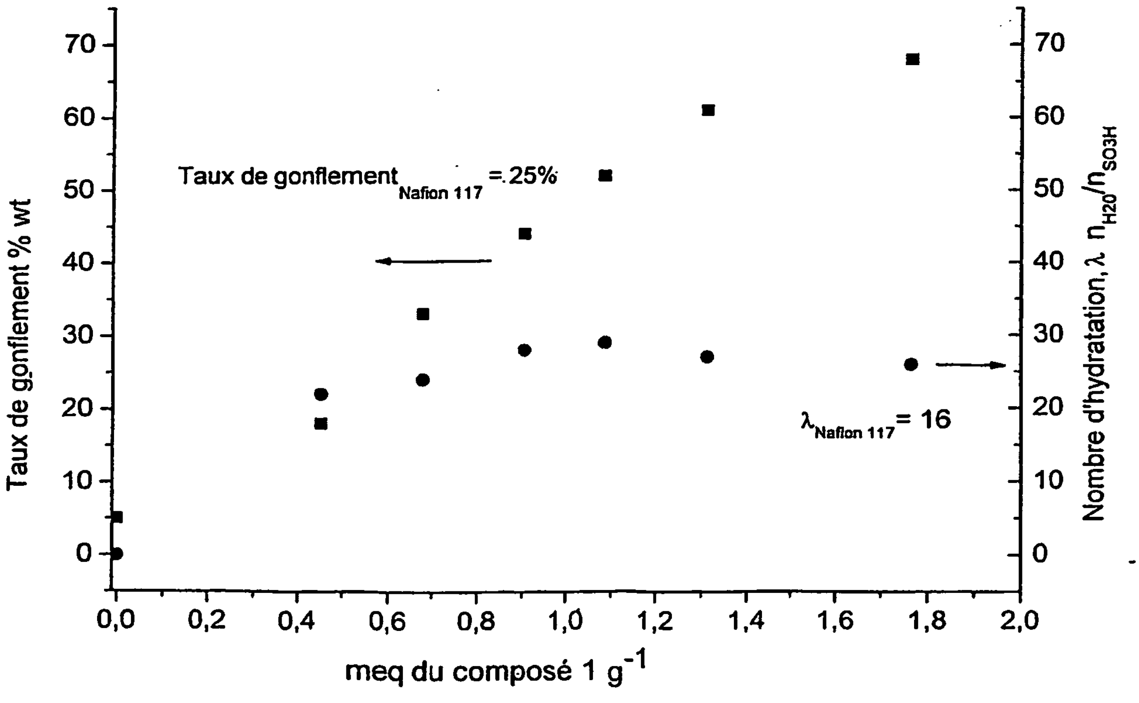


FIGURE 11

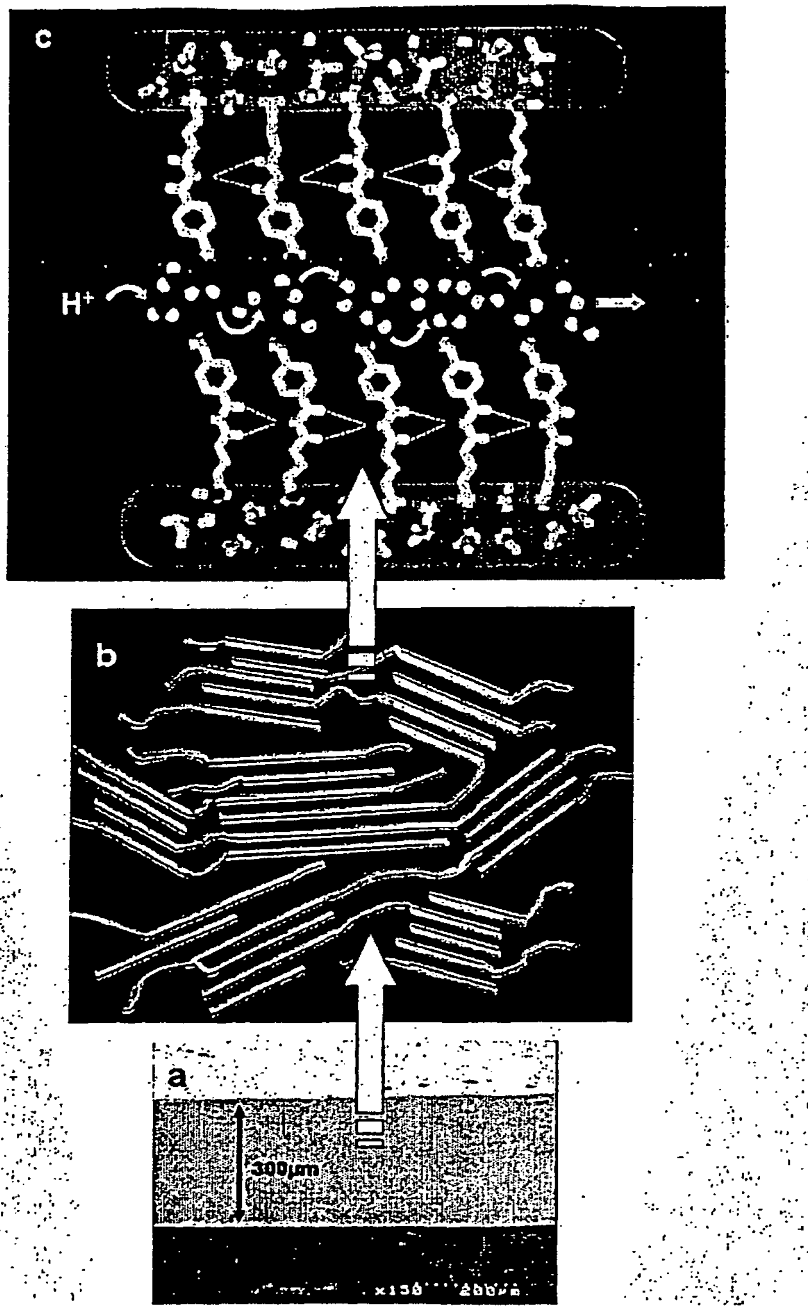


FIGURE 12

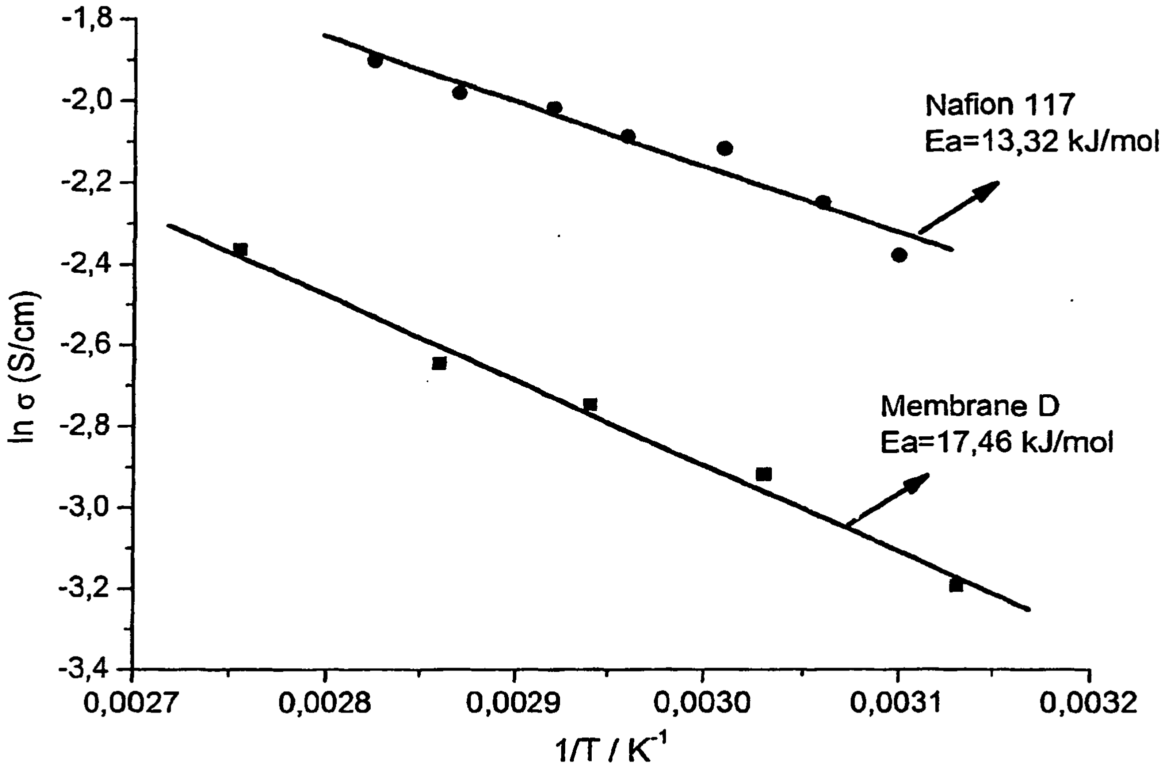
-1,8
-2,0
-2,2
-2,4
-2,6
-2,8
-3,0
-3,2
-3,4
ln σ (S/cm)
0,0027
0,0028
0,0029
0,0030
0,0031
0,0032
1/T / K-1
Nafion 117
Ea=13,32 kJ/mol
Membrane D
Ea=17,46 kJ/mol

FIGURE 13

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 20050164063 A
- WO 2005111114 A


### Littérature non-brevet citée dans la description


- **MAURITZ K. A. et al.** *Chem Rev.,* 2004, vol. 104, 4535-4585
- *Electrochimica Acta,* 2003, vol. 48, 2181-2186
- *J. Organomet. Chem.,* 2002, vol. 641, 165-172
- *Chem. Mater.,* 1998, vol. 10, 1642-1646
- *Chem. Eur. J.,* 2008, vol. 14, 1776-1783
- *J. Power Sources,* 2006, vol. 154, 115-123
- *J. Power Sources,* 2008, vol. 175, 256-260